(19) Europäisches Patentamt
European Patent Office
Office européen des brevets

(11) EP 4 084 028 A1

(12) EUROPEAN PATENT APPLICATION
published in accordance with Art. 153(4) EPC

(43) Date of publication:
**02.11.2022 Bulletin 2022/44**

(21) Application number: **20906344.5**

(22) Date of filing: **23.12.2020**

(51) International Patent Classification (IPC):
***H01G 11/56** (2013.01)* ***H01M 10/052** (2010.01)*
***H01M 10/0565** (2010.01)* ***H01B 1/06** (2006.01)*
***C08G 75/0204** (2016.01)*

(52) Cooperative Patent Classification (CPC):
**C08G 75/0204; H01B 1/06; H01G 11/56;**
**H01M 10/052; H01M 10/0565;** Y02E 60/10;
Y02E 60/13; Y02P 70/50

(86) International application number:
**PCT/JP2020/048112**

(87) International publication number:
**WO 2021/132308 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.12.2019 JP 2019231589**

(71) Applicant: **Toray Industries, Inc.**
**Tokyo, 103-8666 (JP)**

(72) Inventors:
- **DENG, Yugao**
  **Otsu-shi, Shiga 520-2141 (JP)**
- **NAKAMURA, Hirokado**
  **Otsu-shi, Shiga 520-2141 (JP)**
- **KOBAYASHI, Yoshiyuki**
  **Otsu-shi, Shiga 520-8558 (JP)**
- **MORI, Kentaro**
  **Otsu-shi, Shiga 520-2141 (JP)**

(74) Representative: **Kador & Partner PartG mbB**
**Corneliusstraße 15**
**80469 München (DE)**

# (54) SOLID ELECTROLYTE, ELECTRODE, BATTERY, CAPACITOR AND METHOD FOR PRODUCING SOLID ELECTROLYTE

(57) An object of the present invention is to provide a solid electrolyte which exhibits good ionic conductivity in a room temperature state and is excellent in moldability, productivity, and quality stability, an electrode, a battery and a capacitor using the solid electrolyte, and a method of producing the solid electrolyte. The present invention is a solid electrolyte containing an alkali metal salt and a polymer, wherein the polymer has, for example, a monomer unit of a chemical formula (1).

[CHEM. 1]

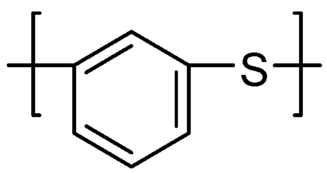

Chemical formula (1)

EP 4 084 028 A1

FIG. 1

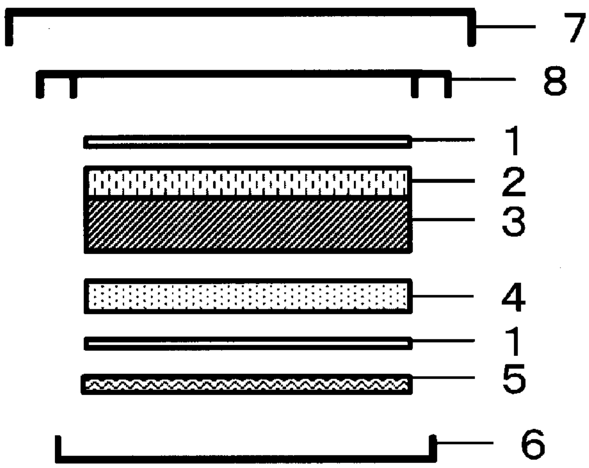

**Description**

TECHNICAL FIELD

The present invention relates to a solid electrolyte, and an electrode, a battery and a capacitor using the solid electrolyte, and a method of producing the solid electrolyte.

BACKGROUND ART

In recent years, alkaline secondary batteries including lithium secondary batteries have been used in various applications such as mobile devices such as smartphones and mobile phones, hybrid vehicles, electric vehicles, and household capacitors, and research and development on them has been actively conducted.

Improvement in safety of alkaline secondary batteries is required, and studies on solid electrolytes that can contribute to improvement in safety are active.

The solid electrolyte is a solid that easily conducts ions, and the solid electrolyte is generally classified into an oxide-based solid electrolyte, a sulfide-based solid electrolyte, and a polymer-based solid electrolyte. As the polymer-based solid electrolyte, one obtained by doping a mixture of polyphenylene sulfide and an alkali metal salt with an electron acceptor (Patent Documents 1 and 2) is known.

PRIOR ART DOCUMENTS

PATENT DOCUMENTS

Patent Document 1: US2017/0005356 A1
Patent Document 2: CN 106450424 A

SUMMARY OF THE INVENTION

PROBLEMS TO BE SOLVED BY THE INVENTION

Patent Document 1 describes that high crystallinity of a solid electrolyte containing polyphenylene sulfide is important for ionic conductivity, and discloses a solid electrolyte using parapolyphenylene sulfide having high crystallinity and a high melting point. On the other hand, when powder molding is performed at a temperature equal to or lower than the melting point of polyphenylene sulfide as disclosed in Patent Document 1, there is a problem in moldability and productivity, and molding in a high temperature state is required for melting and molding, so that there is a possibility that degradation of contained components and the like occur, leading to deterioration of ionic conductivity and destabilization of quality. As disclosed in Patent Document 2, when polyphenylene sulfide is subjected to extrusion molding at a temperature of about 300°C, there is a possibility that degradation of contained components and the like occur in the same manner.

In Patent Documents 1 and 2, there is a problem in productivity because a step of mixing with an alkali metal salt and a step of doping an electron acceptor are provided in the production of a solid electrolyte.

An object of the present invention is to solve the above problems and provide a solid electrolyte which exhibits good ionic conductivity and is excellent in moldability, productivity, and quality stability, an electrode, a battery and a capacitor using the solid electrolyte, and a method of producing the solid electrolyte.

SOLUTIONS TO THE PROBLEMS

To solve the problems described above, the present invention has the following configurations.

(1) A solid electrolyte including an alkali metal salt and a polymer, wherein the polymer has one or more monomer units selected from the group consisting of chemical formulas (1) to (7).

[CHEM. 1]

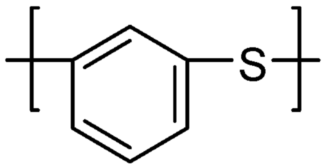

Chemical formula (1)

[CHEM. 2]

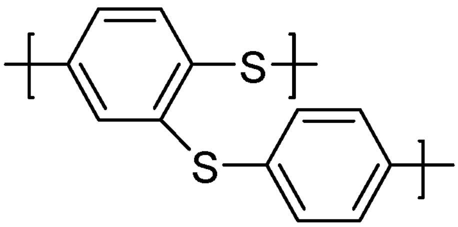

Chemical formula (2)

[CHEM. 3]

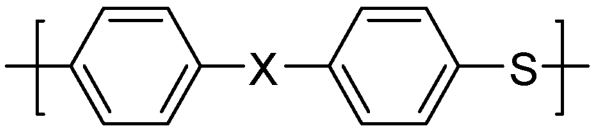

Chemical formula (3)

In the chemical formula (3), X represents an alkylene group, O, CO, or $SO_2$.

[CHEM. 4]

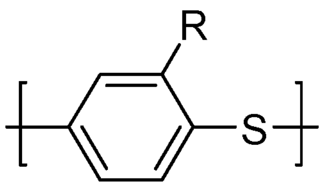

Chemical formula (4)

In the chemical formula (4), R represents an alkyl group, a nitro group, or an alkoxy group.

[CHEM. 5]

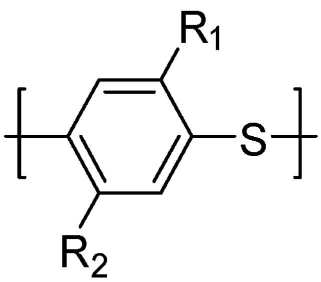

Chemical formula (5)

In the chemical formula (5), $R_1$ and $R_2$ each independently represent an alkyl group, a nitro group, or an alkoxy

group.

[CHEM. 6]

Chemical formula (6)

[CHEM. 7]

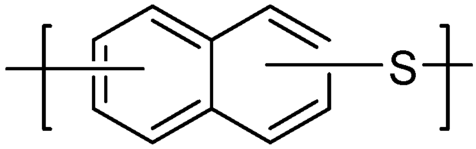

Chemical formula (7)

(2) The solid electrolyte according to (1), wherein the polymer contains 5 mol% or more of the monomer unit selected from the chemical formulas (1) to (7) in 100 mol% of all monomer units.

(3) The solid electrolyte according to (1) or (2), wherein a molar ratio of all the monomer units to the alkali metal salt (moles of all the monomer units : moles of the alkali metal salt) in the polymer is 100 : 2 to 100 : 400.

(4) The solid electrolyte according to any one of (1) to (3), further including an electron acceptor.

(5) The solid electrolyte according to any one of (1) to (4), wherein the polymer has a crystallinity of 20% or less.

(6) The solid electrolyte according to any one of (1) to (5), including a solvent, wherein when lithium bis(trifluoromethane)sulfonimide (LiTFSI) is dissolved in the solvent to prepare a 0.2 mol/L solution, a degree of ionic dissociation (1-ξ) defined by Formula (1) is 0.1 or more, and a diffusion coefficient of solvent ($10^{-10}$ $m^2/s$) defined by Formula (2) is 15 or less at a temperature of 298 K (25°C).

$$\sigma_{imp} = (e_0^2 N/kT)\ (D_{Lithium}+D_{Anion})\ (1-\xi)\ldots \quad \text{Formula (1)}$$

$$D_{solvent} = kT/c\pi\eta r_s\ldots \quad \text{Formula (2)}$$

The symbols used in the formulas above have the following meanings.

$\sigma_{imp}$: ionic conductivity (S/m)
eo: elementary charge (C)
N: Avogadro constant ($mol^{-1}$)
k: Boltzmann constant (J/K)
T: temperature (K)
$D_{Lithium}$: diffusion coefficient of lithium ions ($m^2/s$)
$D_{Anion}$: diffusion coefficient of $N(SO_2CF_3)_2^-$ ($m^2/s$)
(1-ξ): degree of ionic dissociation
$D_{solivent}$: diffusion coefficient of solvent ($10^{-10}$ $m^2/s$)
c: boundary condition constant
π: circumference ratio
η: viscosity (Pa·s)
$r_s$: radius of diffusion (m)

(7) The polymer electrolyte according to (6), wherein the electrolytic-dissociation assistant contains one or more selected from the group consisting of water, γ-butyrolactone, N-methylpyrrolidone, butylene carbonate (BC), ethylene carbonate (EC), propylene carbonate (PC), methyl-γ-butyrolactone (GVL), triglyme (TG), diglyme (DG), ethyl methyl carbonate (EMC), and dimethyl carbonate (DMC).

(8) An electrode including the solid electrolyte according to any one of (1) to (7) and an active material.

(9) A battery including the solid electrolyte according to any one of (1) to (7).

(10) A capacitor including the solid electrolyte according to any one of (1) to (7).

(11) A method of producing the solid electrolyte according to any one of (1) to (7), the method including: a mixing

step of mixing a polymer having one or more monomer units selected from the group consisting of the chemical formulas (1) to (7) and an alkali metal salt to obtain a mixture; and a molding step of molding the mixture at a temperature of 60°C or higher and 320°C or lower.

(12) The method of producing the solid electrolyte, according to (11), further comprising an impregnation step of molding the mixture into a membranous material by the molding step and impregnating the membranous material with a solvent after the molding step, wherein the solvent has a degree of ionic dissociation (1-ξ) defined by Formula (1) of 0.1 or more at 298 K (25°C), and a diffusion coefficient of solvent ($10^{-10}$ $m^2/s$) defined by Formula (2) of 15 or less at 298 K (25°C).

(13) The method of producing the solid electrolyte, according to (12), wherein the solvent contains one or more selected from the group consisting of water, γ-butyrolactone, N-methylpyrrolidone, butylene carbonate (BC), ethylene carbonate (EC), propylene carbonate (PC), methyl-γ-butyrolactone (GVL), triglyme (TG), diglyme (DG), ethyl methyl carbonate (EMC), and dimethyl carbonate (DMC).

EFFECTS OF THE INVENTION

According to the present invention, it is possible to provide a solid electrolyte which exhibits good ionic conductivity in a room temperature state and is excellent in moldability, productivity, and quality stability, an electrode, a battery and a capacitor using the solid electrolyte, and a method of producing the solid electrolyte.

BRIEF DESCRIPTION OF THE DRAWING

Fig. 1 is a conceptual diagram of a structure of a battery according to one embodiment of the present invention.

EMBODIMENTS OF THE INVENTION

(Solid electrolyte)

(Definition of solid electrolyte)

The solid electrolyte in the present invention refers to a substance that is in a solid state at room temperature and easily moves ions by applying an electric field from the outside. In the present invention, the term "solid" refers to one that retains its shape regardless of a shape of a container. The solid electrolyte of the present invention may be impregnated with a solvent as described later.

The solid electrolyte of the present invention contains an alkali metal salt and a polymer.

(Polymer)

It is important that the polymer contained in the solid electrolyte of the present invention contains, as a constituent unit thereof, one or more monomer units selected from the group consisting of the chemical formulas (1) to (7).

[CHEM. 8]

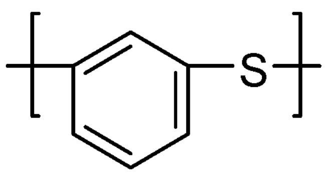

Chemical formula (1)

[CHEM. 9]

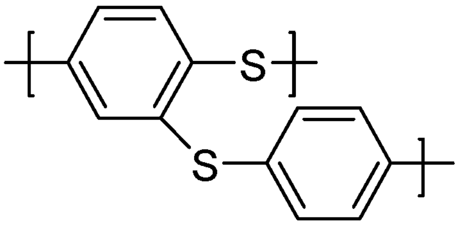

Chemical formula (2)

[CHEM. 10]

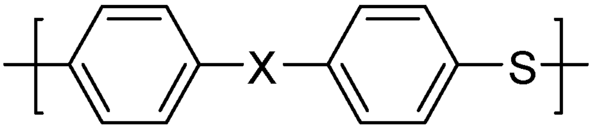

Chemical formula (3)

In the chemical formula (3), X represents an alkylene group, O, CO, or $SO_2$.

[CHEM. 11]

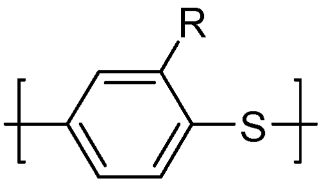

Chemical formula (4)

In the chemical formula (4), R represents an alkyl group, a nitro group, or an alkoxy group.

[CHEM. 12]

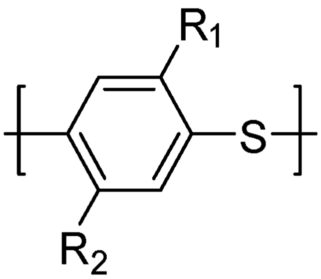

Chemical formula (5)

In the chemical formula (5), $R_1$ and $R_2$ each independently represent an alkyl group, a nitro group, or an alkoxy group.

[CHEM. 13]

Chemical formula (6)

[CHEM. 14]

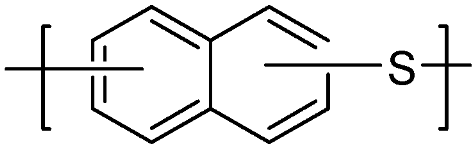

Chemical formula (7)

The polymer can reduce the crystallinity and/or melting point of the solid electrolyte by containing one or more monomer units selected from the group consisting of the chemical formulas (1) to (7). This makes it possible to perform melt processing in a low temperature state during production and molding of the solid electrolyte.

In general, alkali metal salts required for expression of ionic conductivity, particularly those that are easily dissociated into ions, have low thermal stability, and tend to cause weight reduction and decomposition in a high temperature state. In the high temperature state, sublimation of the substance and oxidation of the polymer may occur when an electron acceptor is added.

That is, according to the present invention, the polymer contained in the solid electrolyte of the present invention contains one or more monomer units selected from the group consisting of the chemical formulas (1) to (7), whereby the crystallinity and/or melting point of the solid electrolyte can be reduced, so that melt molding and the like at a low temperature can be performed, and a solid electrolyte excellent in ionic conductivity, moldability, productivity, and quality stability, in which deterioration and the like of contained components are suppressed, can be provided.

Since the polymer containing one or more monomer units selected from the group consisting of the chemical formulas (1) to (7) is aromatic having a sulfide group in the main chain, the polymer is also excellent in flame retardancy and mechanical strength.

From the viewpoint of lowering the melting point and from the viewpoint of the mechanical strength, it is preferable to contain one or more monomer units selected from the group consisting of the chemical formulas (1), (2), (6), and (7) among the chemical formulas (1) to (7), and it is more preferable to contain one or more monomer units selected from the chemical formulas (1) and (2).

In the polymer used in the present invention, the content of the monomer units of the chemical formulas (1) to (7) in 100 mol% of all the monomer units is more than 0 mol%. When the content is more than 0 mol%, preferably 1 mol% or more, more preferably 5 mol% or more, and still more preferably 10 mol% or more, the melting point and the crystallinity of the polymer can be effectively reduced. On the other hand, when the content is 20 mol% or less, more preferably 15 mol% or less, flame retardancy and mechanical strength can be maintained.

The polymer in the present invention is also preferably one obtained by copolymerization with other monomers than one or more monomer units selected from the group consisting of the chemical formulas (1) to (7). In this case, from the viewpoint of the flame retardancy and the mechanical strength, it is preferable to form the polymer after copolymerization with a monomer of a polymer having high crystallinity. From the viewpoint of affinity between this point and the monomer units of the chemical formulas (1) to (7), it is preferable to use paraphenylene sulfide which is a monomer of polyphenylene sulfide.

The content of the paraphenylene sulfide unit in 100 mol% of all the monomer units of the polymer in the present invention is preferably more than 0 mol% and 99 mol% or less. When the content is more than 0 mol% or less, preferably 80 mol% or more, more preferably 85 mol% or more, the flame retardancy and the mechanical strength can be effectively improved. When the content is 99 mol% or less, more preferably 95 mol% or less, and still more preferably 90 mol% or less, there is room for containing one or more monomer units selected from the group consisting of the chemical formulas (1) to (7).

In the polymer in the present invention, the crystallinity by a value obtained by raising the temperature to 400°C with a differential scanning calorimeter and dividing a heat quantity (J/g) by the area of the widest peak by 146.2 (J/g) (hereinafter, such crystallinity is also simply referred to as "crystallinity") is preferably 20% or less. By setting the crystallinity to 20% or less, more preferably 15% or less, the crystallinity of the solid electrolyte can also be easily controlled. In Patent Document 1 and the like, it is known that high crystallinity of a solid electrolyte is important for the ionic conductivity. However, by lowering the crystallinity of the polymer, it is possible to lower the melting point of the polymer to enable low-temperature processing, and suppress decomposition of a lithium salt, sublimation during production in the case of adding an electron acceptor, oxidation of a polymer, and the like, and high ion conductivity can be obtained even with low crystallinity. The temperature required for molding the solid electrolyte can be lowered, and the process of mixing and molding with components such as an alkali metal salt and preferably an electron acceptor can be performed continuously or simultaneously.

(Alkali metal salt)

It is important that the solid electrolyte of the present invention contains an alkali metal salt from the viewpoint of the ionic conductivity.

The alkali metal salt in the present invention refers to a salt containing an alkali metal ion as a constituent ion. Examples thereof include metal salts containing lithium metal ions, sodium metal ions, potassium metal ions, and the like. From the viewpoint of ion diffusibility, metal ions having a small ion diameter are preferable.

An anion in the alkali metal salt is preferably a soft base based on the HSAB rule from the viewpoint of high dissociation to ions, and is preferably a bis(trifluoromethanesulfonyl)imide anion or a bis(fluorosulfonyl)imide anion.

The HSAB rule (Principle of Hard and Soft Acids and Bases) is a rule proposed by R. G. Pearson, in which the strength of an acid and a base is classified from the viewpoint of hardness and softness A hard acid has a high affinity for a hard base, and a soft acid has a high affinity for a soft base. The hard acid has a small atom to be an electron acceptor, does not have a valence electron entering an easily deformable orbit, and has a large positive charge. The soft acid has a large atom to be an electron acceptor, has the valence electron entering the easily deformable orbit, and does not have a charge or has a small charge. The hard base is a base in which a valence electron is strongly bonded to an atom, and the soft base is a base in which a valence electron is easily polarized. The HSAB rule and the classification of acid-bases in HSAB are described in Section 15 of acid-base in Chapter 9 in "Inorganic Chemistry - A Guide to Advanced Study" by R. B. Heslop and K. Jones.

Specifically, lithium salts and sodium salts are preferably contained as the alkali metal salt, one or more selected from lithium hydroxide (LiOH), lithium carbonate ($LiCO_3$), lithium perchlorate ($LiClO_4$), lithium tetrafluoroborate ($LiBF_4$), lithium hexafluorophosphate ($LiPF_6$), lithium bis(fluorosulfonyl)imide (LiFSI), lithium bis(trifluoromethanesulfonyl)imide (LiTFSI), lithium bis(oxalate)borate (LiBOB), sodium hexafluorophosphate ($NaPF_6$), sodium tetrafluoroborate ($NaBF_4$), sodium perchlorate ($NaClO_4$), sodium bis(fluorosulfonyl)imide (NaFSI), and sodium bis(trifluoromethanesulfonyl)imide (NaTFSI) are more preferably contained, and from the viewpoint of high ion dissociation, LiTFSI and one or more kinds obtained from LiFSI are still more preferably contained.

The alkali metal salt may be used by mixing a plurality of kinds of salts at an appropriate ratio.

From the viewpoint of an ion dissociation degree and the ion conductivity, the amount of the alkali metal salt based on 100 parts by mol of all the monomer units of the polymer in the present invention is preferably 2 parts by mol or more and 400 parts by mol or less. When the amount is 2 parts by mol or more, more preferably 5 parts by mol or more, the ionic conductivity as the solid electrolyte is excellent. On the other hand, when the amount is 400 parts by mol or less, more preferably 100 parts by mol or less, and still more preferably 50 parts by mol or less, mechanical properties as the solid electrolyte are excellent.

(Electron acceptor)

The solid electrolyte of the present invention preferably contains an electron acceptor. The electron acceptor in the solid electrolyte of the present invention can form a charge-transfer complex with a polymer, promote dissociation of the alkali metal salt, and promote formation of an ion conduction path.

The electron acceptor is not limited as long as the effect of the present invention is not impaired, and examples thereof include quinone and cyan electron acceptors. Examples thereof include 2,3-dichloro-5,6-dicyano-p-benzoquinone (DDQ), chloranil, tetracyanoquinodimethane (TCNQ), tetracyanoethylene (TCNE), oxygen, iodine, and arsenic pentafluoride ($AsF_5$). In the present invention, from the viewpoint of the ionic conductivity, one or more kinds of electron acceptors may be contained, and a plurality of kinds of acceptors may be used in an appropriate ratio.

(Solvent)

The solid electrolyte of the present invention includes a solvent, and it is preferable that when lithium bis(trifluoromethane)sulfonimide (LiTFSI) is dissolved in the solvent to prepare a 0.2 mol/L solution, at a temperature of 298 K (25°C), the degree of ionic dissociation (1-ξ) defined by Formula (1) is 0.1 or more (condition (1)), and the diffusion coefficient of solvent ($10^{-10}$ $m^2/s$) defined by Formula (2) is 15 or less (condition (2)).

$$\sigma_{imp} = (e_0^2 N/kT)\ (D_{Lithium} + D_{Anion})\ (1-\xi) \ldots \quad \text{Formula (1)}$$

$$D_{solvent} = kT/c\pi\eta r_s \ldots \quad \text{Formula (2)}$$

The symbols used in the formulas above have the following meanings.

$\sigma_{imp}$: ionic conductivity (S/cm)
eo: elementary charge (C)
N: Avogadro constant ($mol^{-1}$)
k: Boltzmann constant (J/K)
T: temperature (K)
$D_{Lithium}$: diffusion coefficient of lithium ions ($m^2/s$)
$D_{Anion}$: diffusion coefficient of $N(SO_2CF_3)_2^-$ ($m^2/s$)
(1-$\xi$): degree of ionic dissociation
$D_{solvent}$: diffusion coefficient of solvent ($10^{-10}$ $m^2/s$)
c: boundary condition constant
$\eta$: viscosity (Pa·s)
$r_s$: radius of diffusion (m)

The solvent satisfying the above conditions (1) and (2) functions as an electrolytic-dissociation assistant, is bonded to lithium ions at an interface of the polymer electrolyte or a non-crystalline portion, and can form a third phase having ionic conductivity superior to that of a polymer matrix. A conduction path is formed by the third phase, and the ionic conductivity of the polymer electrolyte can be improved. Hereinafter, the solvent satisfying the conditions (1) and (2) is also referred to as an "electrolytic-dissociation assistant solvent".

The degree of ionic dissociation (1-$\xi$) indicates the ratio of ion dissociation. From the viewpoint of promoting the dissociation of the alkali metal salt, the degree of ionic dissociation (1-$\xi$) is preferably 0.1 or more, and more preferably 0.3 or more.

The diffusion coefficient of solvent ($D_{solvent}$) indicates the viscosity of the solvent, and the ionic conductivity of the alkali metal ion tends to be higher as this numerical value is lower. From this viewpoint, the diffusion coefficient of solvent ($D_{solvent}$) is preferably 15 or less.

As the electrolytic-dissociation assistant, one or more selected from the group consisting of water, $\gamma$-butyrolactone (GBL), N-methylpyrrolidone (NMP), butylene carbonate (BC), ethylene carbonate (EC), propylene carbonate (PC), methyl-$\gamma$-butyrolactone (GVL), triglyme (TG), diglyme (DG), ethyl methyl carbonate (EMC), and dimethyl carbonate (DMC) are preferably contained from the viewpoint of increasing the ionic conductivity of alkali metal ions. Among them, from the viewpoint of a potential window of the electrolyte, the electrolytic-dissociation assistant more preferably contains at least one of $\gamma$-butyrolactone (GBL) and n-methylpyrrolidone (NMP), and from the viewpoint of affinity with the above-described polymer, the electrolytic-dissociation assistant particularly preferably contains $\gamma$-butyrolactone (GBL).

(Ion diffusion coefficient)

The likelihood of migration of alkali metal ions in the solid electrolyte of the present invention can be determined by an ion diffusion coefficient at 25°C. The ion diffusion coefficient ($m^2/s$) of the alkali metal ion can be measured by nuclear magnetic resonance spectroscopy (NMR) of the ion.

Since the ion diffusion coefficient measured by NMR may take a plurality of values even under the same temperature condition, the ion diffusion coefficient in the present invention refers to a maximum value of the ion diffusion coefficient of the ion at 25°C. From the viewpoint of the ionic conductivity, the ion diffusion coefficient at 25°C of the solid electrolyte of the present invention is preferably $10^{-13}$ $m^2/s$ or more, more preferably $10^{-12}$ $m^2/s$ or more, and still more preferably $10^{-11}$ $m^2/s$ or more.

(Crystallinity)

In the solid electrolyte of the present invention, the crystallinity by a value obtained by raising the temperature of the solid content to 400°C with a differential scanning calorimeter and dividing the heat quantity (J/g) by the area of the widest peak by 146.2 (J/g) is preferably 20% or less. When the crystallinity of the solid content is 20% or less, more preferably 15% or less, the ionic conductivity is excellent.

(Hygroscopic degree)

In the solid electrolyte of the present invention, a hygroscopic degree of the solid content is preferably 20% or less. The smaller the hygroscopic degree, the better; however, when the hygroscopic degree is 20% or less, and more preferably 10% or less, a change in component ratio and deterioration of the electrolyte are prevented, and a long-life solid electrolyte can be obtained.

The method for measuring the hygroscopic degree is as follows. The solid electrolyte is dried in a drying chamber having a dew point of -40°C or lower, and then treated in an environment of 25°C and a relative humidity of 80% for 1

hour. A value obtained by dividing a mass increase before and after treatment by the mass of the polymer electrolyte before the treatment is taken as the hygroscopic degree.

(Ionic conductivity)

In the solid electrolyte of the present invention, the ionic conductivity obtained by a complex impedance method in which an AC voltage of 100 Hz to 100 MHz is applied at 25°C is preferably $10^{-5}$ S/cm or more. When the ionic conductivity is $10^{-5}$ S/cm or more, more preferably $10^{-4}$ S/cm or more, and still more preferably $10^{-3}$ S/cm or more, the ionic conductivity and charge and discharge performance of the battery are excellent. The ionic conductivity can be calculated from the following formula (3) by reading a Nyquist plot resistance value obtained by a complex impedance method under the above conditions.

$$\sigma = D/SR... \quad \text{Formula (3)}$$

where,

- σ: ionic conductivity (S/cm)
- D: thickness (cm) of sample of solid electrolyte
- S: area ($cm^2$) of solid electrolyte sample in contact with measurement electrode
- R: resistance value (Ω)

(Melting point of solid electrolyte)

The solid electrolyte in the present invention preferably has a melting point of 200°C or higher and 320°C or lower. When the melting point is 200°C or higher, the quality stability is excellent. When the melting point is 320°C or lower, more preferably 280°C or lower, and still more preferably 250°C or lower, the moldability and the productivity are excellent. Since the solid electrolyte has a low melting point, mixing can be performed at a lower temperature, and sublimation and deterioration of raw materials can be prevented. When there is a raw material which is easily sublimated, such as an electron acceptor, in a molten state, it is necessary to mix each of an alkali metal salt and the electron acceptor with a polymer in order to prevent the sublimation; however, since the melting point of the solid electrolyte is low, it is possible to melt and mix at one time. This can simplify the process.

The melting point of the solid electrolyte of the present invention is measured as follows. The temperature of the solid electrolyte was raised to 400°C in a nitrogen atmosphere with a differential scanning calorimeter (DSC), and among the obtained endothermic peaks, a peak temperature of the widest peak can be determined as the melting point.

(Form of solid electrolyte)

The form of the solid electrolyte of the present invention is preferably a film in addition to a plate-like form such as a pellet. By taking the form of a film, the solid electrolyte of the present invention can also be applied to the production of a battery in which the solid electrolyte of the present invention is preferably employed without significantly changing the production process. Hereinafter, the solid electrolyte in the form of a film is also referred to as a "solid electrolyte film".

(Method of producing solid electrolyte)

A method of producing the solid electrolyte of the present invention preferably includes, from the viewpoint of the moldability and the quality stability, a mixing step of mixing a polymer having one or more monomer units selected from the group consisting of the chemical formulas (1) to (7) and an alkali metal salt to obtain a mixture, and a molding step of molding the mixture at a temperature of 60°C or higher and 320°C or lower. By setting the temperature in the molding step to 320°C or lower, preferably 320°C or lower, thermal decomposition of the component can be reduced. By setting the temperature to 60°C or higher and preferably 280°C or lower, molding into an arbitrary shape can be performed.

The method of producing a solid electrolyte in the present invention is not limited as long as the effect of the present invention is not impaired, and for example, the following steps can be adopted. First, the polymer is pulverized with a cryo mill so as to have an average particle diameter of 20 μm or less. Here, the average particle diameter refers to an average area-equivalent diameter measured by a static image analytical method described in JIS-Z 8827-1 (2018).

(Atomization of raw material)

A method of atomizing the raw material in the present invention is not limited as long as the effect of the present invention is not impaired, and examples thereof include methods such as a ball mill, a jet mill, and a cryo mill. The raw materials may be atomized and then mixed, or may be mixed and then atomized. The average particle diameter after atomization is preferably 20 $\mu$m or less, and more preferably 10 $\mu$m or less.
A powder pulverized is mixed so that a molar ratio to an alkali metal salt (powder of polymer: alkali metal salt) is 100 : 5.8. The mixture powder is charged into a sealed container, pressurized to 7 MPa at 230°C, and treated for 3 hours. Thereafter, the temperature is kept at 140°C for 1 hour. After cooling, a solid electrolyte pellet having a diameter of 10 mm and a thickness of 0.2 mm is obtained.

(Method of producing film)

(Film formation step)

A method of producing the solid electrolyte film includes an impregnation step of molding the mixture into a membranous material by the molding step (hereinafter, the molding step of molding into a membranous material is also referred to as a "film formation step") and impregnating the membranous material with a solvent after the molding step. In this method, it is preferable that the solvent has a degree of ionic dissociation (1-$\xi$) defined by Formula (1) of 0.1 or more at 298 K (25°C), and a diffusion coefficient of solvent ($10^{-10}$ $m^2/s$) defined by Formula (2) of 15 or less at 298 K (25°C).

$$\sigma_{imp} = (e_0^2 N/kT)\ (D_{Lithium} + D_{Anion})\ (1-\xi) \ldots \quad \text{Formula (1)}$$

$$D_{solvent} = kT/c\pi\eta r_s \ldots \quad \text{Formula (2)}$$

The symbols used in the formulas above have the following meanings.

$\sigma_{imp}$: ionic conductivity (S/m)
eo: elementary charge (C)
N: Avogadro constant ($mol^{-1}$)
k: Boltzmann constant (J/K)
T: temperature (K)
$D_{Lithium}$: diffusion coefficient of lithium ions ($m^2/s$)
$D_{Anion}$: diffusion coefficient of $N(SO_2CF_3)_2^-$ ($m^2/s$)
(1-$\xi$): degree of ionic dissociation
$D_{solvent}$: diffusion coefficient of solvent ($10^{-10}$ $m^2/s$)
c: boundary condition constant
n: circumference ratio
$\eta$: viscosity (Pa·s)
$r_s$: radius of diffusion (m)

That is, such a solvent is the above-described electrolytic-dissociation assistant solvent.
When the order of the film formation step and the impregnation step is not this order, for example, when a membranous material is to be obtained with three components including an alkali metal salt, a polymer, and an electrolytic-dissociation assistant solvent, the electrolytic-dissociation assistant solvent volatilizes when heating is performed to the melting point of the polymer, and as a result, the resulting film may not contain the electrolytic-dissociation assistant solvent or may have an extremely small content of the electrolytic-dissociation assistant solvent. When it is attempted to contain an alkali metal salt and an electrolytic-dissociation assistant solvent in a membranous material of a single polymer after the membranous material is obtained, since the affinity between the polymer and the alkali metal salt as described above is poor, while only the electrolytic-dissociation assistant solvent penetrates into the polymer, the alkali metal salt adheres to the polymer surface, and there is a possibility that the resulting film does not contain the alkali metal salt enough to reach the required ionic conductivity. Thus, it is preferable to include the film formation step and an inclusion step in this order.
In the film formation step, it is preferable to obtain a membranous material after melting and mixing an alkali metal salt and a polymer.
Relative crystallinity of the membranous material obtained in the film formation step is preferably 50% or less.

In the film formation step, it is preferable to obtain a membranous material in which the relative crystallinity of the polymer is suppressed as much as possible, by setting the relative crystallinity to 50% or less, more preferably 35% or less, and still more preferably 20% or less, there are many amorphous parts that is a room for impregnation with the electrolytic-dissociation assistant, and the electrolytic-dissociation assistant solvent can be sufficiently contained in the impregnation step.

The relative crystallinity is calculated by the following formula (4) using a crystal melting heat quantity and a crystallization heat quantity at 1stRUN measured with a differential scanning calorimeter (DSC).

$$XR = [(\Delta Hc-|\Delta Hm|)/|\Delta Hm|] \times 100... \quad \text{Formula (4)}$$

where,

$X_R$: relative crystallinity
$\Delta$Hc: crystal melting heat quantity (J/g) at 1stRUN
$\Delta$Hm: crystallization heat quantity (J/g) at 1stRUN.

While the crystallinity of the polymer described above indicates how much crystals are formed by a ratio to a theoretical melting heat quantity of a perfect crystal of paraphenylene sulfide, the relative crystallinity indicates how much crystallization is performed in a sampling state with respect to the crystallization heat quantity due to actual crystallization of the polymer. That is, in this case, the crystallinity at the stage of forming the membranous material in the film formation step is shown.

As a method of adjusting the relative crystallinity of the membranous material to such a range, a method of rapidly cooling the polymer from the molten state to obtain the membranous material is effective. A known method can be used as a method of rapidly cooling polymer sulfide from the molten state to obtain a membranous material. Examples of the method include a method in which an alkali metal salt and a polymer are melt-extruded by a twin-screw extruder having a T-die attached to a tip thereof and cast on a cast drum cooled by a chiller to continuously obtain a membranous material (hereinafter, this method is also referred to as "continuous film formation"), and a method in which an alkali metal salt and a polyarylene sulfide are melted and mixed by a twin-screw extruder, formed into a strand, and pelletized by a rotary blade, and the pellet is pulverized by a freeze-pulverizer, formed into a powdery substance, pressed by a thermocompression bonding device or the like, and rapidly cooled by a water bath to obtain a membranous material. Among these methods, from the viewpoint of the productivity, the former method by continuous film formation is preferable.

In the continuous film formation in the present invention, it is preferable that stretching in a longitudinal direction and a width direction is not included, that is, stretching is not performed. By not stretching, promotion of crystallization can be suppressed by the orientation of a molecular chain.

The thickness of the membranous material obtained in the film formation step is preferably 100 μm or less. When the thickness is 100 μm or less, more preferably 50 μm or less, a treatment time in the inclusion step can be shortened, for example, and thus the productivity is excellent. In addition, in consideration of interposing the membranous material as the solid electrolyte between the electrodes, the thickness is preferably equal to the thickness of a separator film used in a conventional electrolytic solution-based lithium secondary battery, that is, 20 μm or less.

When the film thickness is reduced by continuous film formation by non-stretching, if the film thickness is reduced only with an alkali metal salt and a polyarylene sulfide, handling may be reduced, and therefore, a method of film formation by extrusion lamination or composite film formation is effective.

The extrusion lamination is generally known as a method of pressure-bonding a support film to which an adhesive is applied at the time of casting to form a film having a two-layer structure. On the other hand, in the present invention, when the adhesive is supplied to the support film without being applied thereto, the support film can be peeled off after film formation. This makes it easy to obtain a thin membranous material.

The composite film formation is a film formation method of obtaining an AB laminated film or an ABA laminated film using two extruders (extruder A, extruder B). For example, an alkali metal and the polymer used in the present invention are supplied to the extruder B, and a resin having good peelability with the polymer as described above used in the present invention, such as PET, is supplied to the extruder A to obtain an ABA laminated film. Then, the layer A can be peeled off to obtain a thin layer B.

When a membranous material is obtained, a small amount of inorganic particles such as talc may be contained for the purpose of securing releasability from a cast roll or preventing blocking between the membranous materials.

(Impregnation step)

In the impregnation step, the membranous material obtained in the film formation step is impregnated with the

electrolytic-dissociation assistant solvent. In the impregnation step, conditions such as temperature and pressure at the time of impregnation may be appropriately set depending on the types of the polymer, the alkali metal salt, and the electrolytic-dissociation assistant. For example, with respect to temperature conditions, heating and impregnation may be performed, or impregnation may be performed at room temperature. Regarding pressure conditions, impregnation may be performed in a pressurized state, or impregnation may be performed at a normal pressure or in a reduced pressure state.

When the membranous material is impregnated with the electrolytic-dissociation assistant solvent, a single or two or more kinds of electrolytic-dissociation assistant solvents may be used, or a swelling solvent may be added for the purpose of assisting the impregnation. By adding the swelling solvent to the electrolytic-dissociation assistant solvent, an impregnation time can be shortened, and a film excellent in quality stability can also be produced.

The swelling solvent is preferably a solvent having a low melting point and high volatility in order to have a high swellability in a polymer and not to remain in the obtained electrolyte film. Specific examples thereof include toluene, ethanol, and acetone. In the case of impregnation using the swelling solvent, a method is preferable in which a solution adjusted to a specific concentration with the electrolytic-dissociation assistant solvent and the swelling solvent is prepared, and impregnation is performed while heating to a temperature at which the swelling solvent volatilizes. The impregnation using the swelling solvent makes it possible to accurately control an amount of the electrolytic-dissociation assistant solvent present in a film of the solid electrolyte to be finally obtained.

The continuity between the film formation step and the inclusion step may be an in-line method or an off-line method.

In the in-line method, the film formation step and the inclusion step are performed in the same production line. Specific examples thereof include a method of casting on a cooling roll from an extruder in the film formation step, and continuously immersing a membranous material in a bath having an electrolytic-dissociation assistant solvent as it is. The in-line method is suitable for continuous production with the same formulation, but is unsuitable when it is necessary to change the electrolytic-dissociation assistant solvent for each lot.

In the off-line method, the film formation step and the inclusion step are performed in different production lines. Specific examples include a method in which a membranous material obtained by casting on a cooling roll from an extruder in the film formation step is wound in a roll shape and immersed in a bath having an electrolytic-dissociation assistant solvent together with the roll or while being unwound from the roll. An oven can also be used. For example, when a PPS film containing a lithium salt is impregnated with GBL, the film and the GBL are placed in a sealed container and heated in an oven at normal pressure and 120°C for 1 hour. When the pressure is reduced, the PPS film containing a lithium salt and the GBL are placed in an open container, and heated at 120°C for 1 hour while being evacuated in a vacuum oven. The off-line method is unsuitable for continuous production with the same formulation, but is suitable when it is necessary to change the electrolytic-dissociation assistant solvent for each lot.

(Electrode and method of producing electrode)

The solid electrolyte of the present invention can be suitably used for an electrode. That is, the electrode of the present invention includes the solid electrolyte of the present invention and an active material. By containing the solid electrolyte of the present invention, the ionic conductivity is excellent. From the viewpoint of conductivity and mechanical strength, it is preferable to contain one or more selected from a conductive substance, a conductive auxiliary agent, and a binder.

Although not limited as long as the effect of the present invention is not impaired, the electrode of the present invention can be produced as follows. First, a solid electrolyte is produced by the above-described method of producing a solid electrolyte. The obtained solid electrolyte is pulverized with a cryo mill so as to have an average particle diameter of 20 μm or less. Thereafter, lithium cobalt oxide (manufactured by FUJIFILM Wako Pure Chemical Corporation), acetylene black (manufactured by FUJIFILM Wako Pure Chemical Corporation), polyvinylidene fluoride ("Kynar" (registered trademark) HSV 900 manufactured by Arkema), and N-methylpyrrolidone (manufactured by FUJIFILM Wako Pure Chemical Corporation) are prepared and mixed in a mass ratio of 70 : 4.7 : 3.1 : 2.2 : 150. The resulting mixture is mixed for 30 minutes to obtain a slurry of an electrode active material. The obtained slurry is applied to an aluminum foil by an applicator with an interval of 75 μm, and vacuum-dried at 85°C for 12 hours. The obtained electrode foil is punched into an appropriate size to obtain a positive electrode containing a solid electrolyte.

(Battery and method of producing battery)

The solid electrolyte of the present invention can be suitably used for a battery. That is, the battery of the present invention includes the solid electrolyte of the present invention. Although not limited as long as the effect of the present invention is not impaired, the battery of the present invention can be produced as follows. First, a solid electrolyte is prepared by the above-described method of producing a solid electrolyte. Then, a positive electrode containing the solid

electrolyte is prepared by the above-described method of producing an electrode. After the solid electrolyte and the positive electrode are thermocompression-bonded at 230°C and 7 MPa for 1 hour, as shown in Fig. 1, a lithium metal is used as a negative electrode, a negative electrode case 6, a plate spring 5, a spacer 1, a lithium metal negative electrode 4, a solid electrolyte 3, a positive electrode 2, the spacer 1, a gasket 8, and a positive electrode case 7 are assembled in this order from the bottom, and caulked by a crimper for a coin cell to assemble a coin cell. When the solid electrolyte of the present invention is in the form of a film, for example, first, the electrolyte film, a positive electrode material, and a negative electrode material are wound with a winding machine to obtain a wound body. Thereafter, the obtained wound body is sealed with an exterior material to obtain a battery having an electrolyte film.

(Capacitor)

The solid electrolyte of the present invention can also be suitably used for a capacitor. That is, the capacitor of the present invention includes the solid electrolyte of the present invention. Although not limited as long as the effect of the present invention is impaired, as an example, the capacitor of the present invention can adopt an aspect including an anode body, a cathode body, and a solid electrolyte layer of the present invention interposed between the anode body and the cathode body.

EXAMPLES

Hereinafter, although the present invention will be described by way of examples, the present invention is not necessarily limited only to the aspects shown in the examples.

[Measurement and evaluation methods]

(1) Crystallinity and melting point

The degrees of crystallinity of the polymer and the solid electrolyte were measured with a differential scanning calorimeter (DSC). The polymer or the solid electrolyte was pulverized with a cryo mill until the average particle diameter became 0.5 mm or less to obtain a powder sample. 2.5 mg of the powder sample was filled in an aluminum sample holder of the DSC, and placed on a sample stand. The temperature of the set powder sample was raised from 25°C to 120°C at a rate of 10°C/min under a nitrogen atmosphere, and the powder sample was held at 120°C for 2 hours. Thereafter, the temperature was raised to 400°C at a rate of 10°C/min. Among the endothermic peaks obtained during this period, the peak having the largest area was regarded as a melting peak, and a value obtained by dividing a melting heat quantity (J/g) obtained from the melting peak area by 146.2 (J/g) and multiplying the resulting value by 100 was defined as the crystallinity (%). A peak temperature of the melting peak was defined as the melting point.

(2) Relative crystallinity

2.5 mg of a powder sample obtained in the same manner as in the above (1) was filled in an aluminum sample holder of the DSC, and placed on a sample stand, and the temperature was raised from 25°C to 350°C at a rate of 10°C/min in a nitrogen atmosphere. The heat quantity obtained from the peak area of the endothermic peak during this 1stRUN was defined as the crystal melting heat quantity, the heat quantity obtained from the peak area of an exothermic peak was defined as the crystallization heat quantity, and the relative crystallinity was calculated from the following formula (4).

$$XR = [(\Delta Hc-|\Delta Hm|)/|\Delta Hm|] \times 100... \quad \text{Formula (4)}$$

where,

$X_R$: relative crystallinity
$\Delta Hc$: crystal melting heat quantity (J/g) at 1stRUN
$\Delta Hm$: crystallization heat quantity (J/g) at 1stRUN.

(3) Thickness

The thickness was measured with a constant pressure thickness measuring instrument according to JIS K6250 (2019).

(4) Ion conductivity

The ion conductivity was measured by the following method.

When the solid electrolyte was a plate-like solid electrolyte such as a pellet, the solid electrolyte was pulverized with a cryo mill so that the average particle diameter was 0.5 mm or less. 0.2 g of the pulverized solid electrolyte was placed in a metal container (KPSolidCell manufactured by Hohsen Corp.) having a diameter of 10 mm, heated to 230°C, treated at 7 MPa for 30 minutes, and then cooled to the atmosphere to obtain a sample for measurement. The thickness of the obtained sample was measured with a micrometer and then set in a sample holder.

When the solid electrolyte was a film, the film was punched out with a Thomson blade having a diameter of 10 mm, and set in a pressure holder (LN-Z2-HF-PH series manufactured by TOYO Corporation).

An AC voltage of 100 Hz to 100 MHz was applied to the set sample using a high frequency impedance measuring system (4990EDMS-120K manufactured by TOYO Corporation) to obtain a Nyquist plot by a complex impedance method. The resistance value was read from the obtained Nyquist plot, and the ionic conductivity was calculated from the following formula (3).

$$\sigma = D/SR... \quad \text{Formula (3)}$$

where,

σ: ionic conductivity (S/cm)
D: thickness (cm) of sample of solid electrolyte
S: area ($cm^2$) of solid electrolyte sample in contact with measurement electrode
R: resistance value (Ω)

A sample area was 78.5 $mm^2$ (0.785 $cm^2$) because the sample was punched to a diameter of 10 mm.

The number of samples in the measurement was five, and the average value was calculated. A value obtained by dividing a standard deviation thereof by the average value was used as an evaluation index of quality stability.

(5) Ion diffusion coefficient

The ion diffusion coefficient was measured by pulsed field gradient nuclear magnetic resonance spectroscopy (PFG-NMR). Measurement was performed at 25°C in a dry nitrogen atmosphere using a nuclear magnetic resonator (AVANCE III HD400 manufactured by Bruker Biospin). Observation was performed at $^7Li$ and 155.6 MHz. From a diffusion plot, fitting with two components was performed using a least squares method. Among the obtained values, the largest value was taken as the ion diffusion coefficient.

(6) Hygroscopic degree

The solid electrolyte containing no solvent was taken out from a drying chamber having a dew point of -40°C or lower, and treated at 25°C and a relative humidity of 80% for 1 hour. A value obtained by dividing the mass increase before and after treatment by the mass of the solid electrolyte before the treatment was taken as the hygroscopic degree.

[Polymer]

(Polymer 1)

A polymer 1 was a copolymer composed of 15 mol% of meta-phenylene sulfide represented by the chemical formula (1) and 85 mol% of paraphenylene sulfide represented by the following chemical formula (8) in the main chain with respect to 100 mol% of all the monomer units.

[CHEM. 15]

Chemical formula (8)

In the following Production Example of a polymer 3, 3.155 kg (21.46 mol) of 1,4-dichlorobenzene and 0.557 kg (3.79 mol) of 1,3-dichlorobenzene were simultaneously added in place of 1,4-dichlorobenzene (25.25 mol) to obtain the polymer 1.

The polymer 1 had a melting point of 280°C and crystallinity of 31%.

(Polymer 2)

A polymer 2 was a copolymer composed of 10 mol% of meta-phenylene sulfide represented by the chemical formula (1) and 90 mol% of paraphenylene sulfide represented by the chemical formula (8) in the main chain with respect to 100 mol% of all the monomer units.

In the following Production Example of a polymer 3, 3.341 kg (22.72 mol) of 1,4-dichlorobenzene and 0.371 kg (2.53 mol) of 1,3-dichlorobenzene were simultaneously added in place of 1,4-dichlorobenzene (25.25 mol) to obtain the polymer 2.

The polymer 2 had a melting point of 260°C and crystallinity of 18.4%.

(Polymer 3)

The polymer 3 was a polymer composed of paraphenylene sulfide represented by the chemical formula (8) in the main chain.

6.005 kg (25 mol) of sodium sulfide nonahydrate, 0.787 kg (9.6 mol) of sodium acetate, and 5 kg of NMP (N-methylpyrrolidone) were charged into an autoclave with a stirrer, the temperature was gradually raised to 205°C while nitrogen was passed, and 3.6 liters of water was distilled out. Next, after a reaction vessel was cooled to 180°C, 3.712 kg (25.25 mol) of 1,4-dichlorobenzene and 2.4 kg of NMP were added, the mixture was hermetically sealed under nitrogen, and after the temperature was raised to 270°C, the mixture was reacted at 270°C for 2.5 hours. Next, the mixture was charged into 10 kg of NMP heated to 100°C, continuously stirred for about 1 hour, then filtered, and further repeatedly washed with hot water at 80°C for 30 minutes three times. This was filtered, put into 25 liters of an aqueous solution containing 10.4 g of calcium acetate, continuously stirred in a hermetically sealed autoclave at 192°C for about 1 hour, then filtered, washed with ion-exchanged water at about 90°C until pH of a filtrate reached 7, and then dried under reduced pressure at 80°C for 24 hours to obtain the polymer 3.

(Polymer 4)

A polymer 4 was a copolymer composed of 20 mol% of repeating unit represented by the chemical formula (2) and 80 mol% of paraphenylene sulfide represented by the chemical formula (8) in the main chain with respect to 100 mol% of all the monomer units.

In the Production Example of the polymer 3, 2.970 kg (20.2 mol) of 1,4-dichlorobenzene and 0.916 kg (5.05 mol) of 1,2,4-trichlorobenzene were simultaneously added in place of 1,4-dichlorobenzene (25.25 mol) to obtain the polymer 4.

(Polymer 5)

A polymer 5 was obtained by mixing the polymer 1 and the polymer 3 at a molar ratio of 1 : 1 in terms of monomer units.

(Polymer 6)

A polymer 6 was a copolymer composed of 10 mol% of 2-metyl-phenylene slufide represented by the chemical formula (4) and 90 mol% of paraphenylene sulfide represented by the chemical formula (8) in the main chain with respect to 100 mol% of all the monomer units.

In the Production Example of the polymer 3, 3.341 kg (22.72 mol) of 1,4-dichlorobenzene and 0.406 kg (2.53 mol) of 2-metyl-1,4-dichlorobenzene were simultaneously added in place of 1,4-dichlorobenzene (25.25 mol) to obtain the polymer 6.

(Polymer 7)

A polymer 7 was a copolymer composed of 10 mol% of 2,5-dimetyl-phenylene slufide represented by the chemical formula (5) and 90 mol% of paraphenylene sulfide represented by the chemical formula (8) in the main chain with respect to 100 mol% of all the monomer units.

In the Production Example of the polymer 3, 3.341 kg (22.72 mol) of 1,4-dichlorobenzene and 0.442 kg (2.53 mol) of 2,5-dimetyl-1,4-dichlorobenzene were simultaneously added in place of 1,4-dichlorobenzene (25.25 mol) to obtain the polymer 7.

(Polymer 8)

Polyethylene (PE) was used as a polymer 8.

(Polymer 9)

Polyethylene terephthalate (PET) was taken as a polymer 9.

(Polymer 10)

Polystyrene (PS) was used as a polymer 10.

(Polymer 11)

Polypyromellitimide (PI) ("Kapton" (registered trademark) manufactured by DuPont) was used as a polymer 11.

(Polymer 12)

A polymer 12 was a copolymer composed of 15 mol% of repeating unit represented by the chemical formula (1), 1 mol% of repeating unit represented by the chemical formula (2), and 84 mol% of paraphenylene sulfide represented by the chemical formula (8) in the main chain with respect to 100 mol% of all the monomer units.

[Alkali metal salt]

(Alkali metal salt 1)

Lithium bis(trifluoromethanesulfonyl)imide (manufactured by Tokyo Chemical Industry Co., Ltd.) was used as an alkali metal salt 1.

(Alkali metal salt 2)

Lithium bis(fluorosulfonyl)imide (manufactured by Tokyo Chemical Industry Co., Ltd.) was used as an alkali metal salt 2.

(Alkali metal salt 3)

Lithium hydroxide (manufactured by Alfa Aesar) was used as an alkali metal salt 3.

[Electron acceptor]

(Acceptor 1)

Chloranil (manufactured by FUJIFILM Wako Pure Chemical Corporation) was used as an acceptor 1.

(Acceptor 2)

2,3-Dichloro-5,6-dicyano-p-benzoquinone (DDQ) (manufactured by Tokyo Chemical Industry Co., Ltd.) was used as an acceptor 2.

(Acceptor 3)

Tetracyanoethylene (TCNE) (manufactured by Tokyo Chemical Industry Co., Ltd.) was used as an acceptor 3.

[Solvent]

(Electrolytic-dissociation assistant solvent)

GBL: γ-butyrolactone (Kishida Chemical Co., Ltd.). The degree of ionic dissociation at 298 K (25°C) is 0.64, and the diffusion coefficient of solvent at the same temperature is 5.3.
NMP: N-methylpyrrolidone (Kishida Chemical Co., Ltd.). The degree of ionic dissociation at 298 K (25°C) is 0.18, and the diffusion coefficient of solvent at the same temperature is 5.1.
EC: ethylene carbonate. The degree of ionic dissociation at 298 K (25°C) is 0.6, and the diffusion coefficient of solvent at the same temperature is 4.3.
PC: propylene carbonate. The degree of ionic dissociation at 298 K (25°C) is 0.62, and the diffusion coefficient of solvent at the same temperature is 3.26.
EMC: ethyl methyl carbonate. The degree of ionic dissociation at 298 K (25°C) is 0.1, and the diffusion coefficient of solvent at the same temperature is 1.8.
BC: butylene carbonate. The degree of ionic dissociation at 298 K (25°C) is 0.64, and the diffusion coefficient of solvent at the same temperature is 2.6.
GVL: methyl-γ-butyrolactone. The degree of ionic dissociation at 298 K (25°C) is 0.65, and the diffusion coefficient of solvent at the same temperature is 5.0.
TG: triglyme. The degree of ionic dissociation at 298 K (25°C) is 0.38, and the diffusion coefficient of solvent at the same temperature is 1.8.
DG: diglyme. The degree of ionic dissociation at 298 K (25°C) is 0.376, and the diffusion coefficient of solvent at the same temperature is 5.1.
DMC: dimethyl carbonate. The degree of ionic dissociation at 298 K (25°C) is 0.11, and the diffusion coefficient of solvent at the same temperature is 1.6.

(Swelling solvent)

EtOH: special grade ethanol (manufactured by Tokyo Chemical Industry Co., Ltd.).
$Me_2CO$: acetone (Tokyo Chemical Industry Co., Ltd.).

[Example 1]

(Mixing step)

The polymer 1 was pulverized so as to have an average particle diameter of 20 μm or less. Thereafter, the alkali metal salt 1 was prepared at a ratio of 1.67 g to 10.82 g of a powder of the polymer 1. The molar ratio of the number of monomer units contained in the polymer 1 and the alkali metal salt 1 was 100 : 5.8.

(Molding step)

A powder of the mixture was charged into a sealed container, heated and pressurized to 7 MPa at 245°C, and held for 3 hours. Thereafter, the powder was held at 140°C for 1 hour. After cooling to 25°C, a pellet of the solid electrolyte having a diameter of 10 mm and a thickness of 0.2 mm was obtained.
The results of the evaluation are shown in Table 2. Since the polymer 1 used in Example 1 had a low melting point, the solid electrolyte of Example 1 was molded at a low temperature by a single heating and pressurization treatment, no insufficient mixing of raw materials or decomposition of the raw materials occurred, and the productivity was excellent. The solid electrolyte of Example 1 exhibited good ionic conductivity and was also excellent in moldability and quality stability.

[Examples 2 to 4, Comparative Example 1]

A pellet of the solid electrolyte was prepared and evaluated in the same manner as in Example 1 except that the polymer, the alkali metal salt, the heating/pressurization treatment temperature, and the molar ratio were as shown in Table 1. The results of the evaluation are shown in Table 2.

Examples 2 to 4 were also molded at a low temperature by a single heating and pressurization treatment, and was excellent in productivity. The solid electrolytes of these Examples exhibited good ionic conductivity and were also excellent in moldability and quality stability. In Comparative Example 1, it was necessary to mold at a high temperature, so that decomposition of the alkali metal salt occurred and the quality stability was poor.

[Example 5]

(Mixing step)

The polymer 1 was pulverized so as to have an average particle diameter of 20 μm or less. Thereafter, the alkali metal salt 1 and the acceptor 1 were prepared at a ratio of 2.45 g and 7.14 g, respectively, to 10.82 g of the powder of the polymer 1. The molar ratio of the number of monomer units contained in the polymer 1, the alkali metal salt 1, and the electron acceptor 1 was 100 : 8.5 : 29.

(Molding step)

A powder of this mixture was charged into a sealed container, and a pellet of the solid electrolyte was obtained in the same manner as in Example 1. The results of the evaluation are shown in Table 2. As in Example 1, since the polymer 1 used in Example 5 had a low melting point, the solid electrolyte of Example 5 was molded at a low temperature by a single heating and pressurization treatment, no insufficient mixing of raw materials or decomposition and sublimation of the raw materials occurred, and the productivity was excellent. The solid electrolyte of Example 5 exhibited good ionic conductivity and was also excellent in moldability and quality stability.

[Examples 6 to 12, Comparative Examples 2 and 3]

A pellet of the solid electrolyte was prepared and evaluated in the same manner as in Example 5 except that the polymer, the electron acceptor, the treatment temperature, and the molar ratio were as shown in Table 1. The results of the evaluation are shown in Table 2.

Since the polymer used in Examples 6 to 12 had a low melting point, the solid electrolytes of Examples 6 to 12 were molded at a low temperature by a single heating and pressurization treatment, no insufficient mixing of raw materials or decomposition and sublimation of the raw materials occurred, and the productivity was excellent. The solid electrolytes of these Examples exhibited good ionic conductivity and were excellent in moldability and quality stability. In Comparative Example 2, it was necessary to mold at a high temperature, so that decomposition of the alkali metal salt and sublimation of the electron acceptor occurred and the quality stability was poor. In Comparative Example 3, since molding was performed at a temperature lower than the melting point of the polymer, the solid electrolyte easily collapsed and the moldability was insufficient. For the same reason, the diffusion of the alkali metal salt was insufficient, the formation of the ion conduction path was insufficient, and the ion conductivity and the quality stability were poor.

[Comparative Example 4]

(Mixing step)

The polymer 3 was pulverized so as to have an average particle diameter of 20 μm or less. Thereafter, the alkali metal salt 1 was prepared at a ratio of 2.45 g to 10.82 g of a powder of the polymer 3. The molar ratio of the number of monomer units contained in the polymer 3 and the alkali metal salt 1 was 100 : 8.5.

(Molding step)

A powder of the mixture was charged into a sealed container, heated and pressurized to 7 MPa at 340°C, and held for 3 hours. Thereafter, the powder was held at 140°C for 1 hour and cooled to 25°C.

(Second mixing step)

The mixture after the treatment was pulverized again with a cryo mill so that the average particle diameter was 20 μm or less. The acceptor 1 was prepared at a ratio of 7.14 g to 13.27 g of the obtained powder.

(Second molding step)

The mixture powder was charged into a sealed container, pressurized to 7 MPa at 245°C, and held for 3 hours. Thereafter, the powder was held at 140°C for 1 hour. After cooling to 25°C, a pellet of the solid electrolyte having a diameter of 10 mm and a thickness of 0.2 mm was obtained.

The results of the evaluation are shown in Table 2. In this comparative example, a solid electrolyte having high ion conductivity was obtained; however, it was necessary to mix the alkali metal salt and the electron acceptor in another process, and the productivity was poor. In this comparative example, the sublimation of the electron acceptor was avoided; however, the decomposition of the alkali metal salt mixed at a high temperature could not be completely prevented, and the quality stability was poor.

[Table 1]

| | Raw material | | | Production process | | Molar ratio | | |
|---|---|---|---|---|---|---|---|---|
| | Polymer | Alkali metal salt | Electron acceptor | Treatment temperature (°C) | Treatment pressure (MPa) | Polymer | Alkali metal salt | Electron acceptor |
| Example 1 | 1 | 1 | None | 245 | 7 | 100 | 5.8 | 0 |
| Example 2 | 1 | 2 | None | 245 | 7 | 100 | 5.8 | 0 |
| Example 3 | 1 | 3 | None | 245 | 7 | 100 | 5.8 | 0 |
| Example 4 | 1 | 1 | None | 245 | 7 | 100 | 50.0 | 0 |
| Example 5 | 1 | 1 | 1 | 245 | 7 | 100 | 8.5 | 29 |
| Example 6 | 1 | 1 | 2 | 245 | 7 | 100 | 8.5 | 29 |
| Example 7 | 1 | 1 | 3 | 245 | 7 | 100 | 8.5 | 29 |
| Example 8 | 2 | 1 | 1 | 260 | 7 | 100 | 8.5 | 29 |
| Example 9 | 4 | 1 | 1 | 260 | 7 | 100 | 8.5 | 29 |
| Example 10 | 5 | 1 | 1 | 260 | 7 | 100 | 8.5 | 29 |
| Example 11 | 6 | 1 | 1 | 260 | 7 | 100 | 8.5 | 29 |
| Example 12 | 7 | 1 | 1 | 260 | 7 | 100 | 8.5 | 29 |
| Comparative Example 1 | 3 | 1 | None | 340 | 7 | 100 | 5.8 | 0 |
| Comparative Example 2 | 3 | 1 | 1 | 340 | 7 | 100 | 8.5 | 29 |
| Comparative Example 3 | 3 | 1 | 1 | 245 | 7 | 100 | 8.5 | 29 |
| Comparative Example 4 | 3 | 1 | 1 | 340/245 | 7 | 100 | 8.5 | 29 |

[Table 2]

| | Ion conductivity (S/cm) | Ion diffusion coefficient ($m^2/s$) | Crystallinity (%) | Melting point (°C) | Quality stability |
|---|---|---|---|---|---|
| Example 1 | $4.9\times10^{-5}$ | $1.9\times10^{-11}$ | 9.8 | 233 | 0.1 |
| Example 2 | $3.4\times10^{-5}$ | $6.8\times10^{-12}$ | 10.2 | 236 | 0.2 |

(continued)

| | Ion conductivity (S/cm) | Ion diffusion coefficient ($m^2/s$) | Crystallinity (%) | Melting point (°C) | Quality stability |
|---|---|---|---|---|---|
| Example 3 | $2.1\times10^{-5}$ | $4.1\times10^{-12}$ | 11.7 | 241 | 0.2 |
| Example 4 | $4.6\times10^{-4}$ | $2.7\times10^{-11}$ | 7.6 | 228 | 0.6 |
| Example 5 | $2.4\times10^{-4}$ | $1.7\times10^{-11}$ | 8.4 | 231 | 0.2 |
| Example 6 | $1.7\times10^{-4}$ | $1.1\times10^{-11}$ | 9.1 | 235 | 0.3 |
| Example 7 | $1.4\times10^{-4}$ | $1.3\times10^{-11}$ | 8.8 | 233 | 0.5 |
| Example 8 | $1.2\times10^{-4}$ | $1.1\times10^{-11}$ | 13.1 | 246 | 0.5 |
| Example 9 | $6.3\times10^{-5}$ | $7.4\times10^{-12}$ | 19.3 | 254 | 0.7 |
| Example 10 | $9.1\times10^{-5}$ | $9.6\times10^{-12}$ | 15.4 | 249 | 0.6 |
| Example 11 | $1.0\times10^{-4}$ | $9.1\times10^{-12}$ | 17.2 | 251 | 0.3 |
| Example 12 | $9.7\times10^{-5}$ | $8.2\times10^{-12}$ | 18.1 | 253 | 0.4 |
| Comparative Example 1 | $1.1\times10^{-5}$ | $3.6\times10^{-12}$ | 31.5 | 282 | 1.2 |
| Comparative Example 2 | $5.2\times10^{-5}$ | $2.8\times10^{-12}$ | 26.5 | 274 | 1.7 |
| Comparative Example 3 | $5.6\times10^{-6}$ | $2.1\times10^{-12}$ | 28.2 | 278 | 2.1 |
| Comparative Example 4 | $2.1\times10^{-4}$ | $1.4\times10^{-11}$ | 32.4 | 282 | 1.1 |

(Method of producing electrolyte containing electrolytic-dissociation assistant)

[Example 13]

(Mixing step)

The polymer 1 was pulverized so as to have an average particle diameter of 20 μm or less. Thereafter, the alkali metal salt 1 was prepared at a ratio of 121 g to 100 g of the powder of the polymer 1. The molar ratio of the number of monomer units contained in the polymer 1 and the alkali metal salt 1 was 100 : 45.4.

(Film formation step)

The powder of the mixture was charged into a melt kneader under dry room conditions at a dew point of -40°C, and kneaded at 260°C. Thereafter, the powder was cooled to 25°C by air cooling. The obtained sample was pulverized again so that the average particle diameter was 20 μm or less. The obtained powder was supplied to an extruder and melted at a temperature of the extruder of 300°C, and the molten mixture was melt-extruded from a T-die attached to the tip of the extruder onto a cast roll set at 280°C to form a film. Stretching was not performed, and a film having a thickness of 30 μm was obtained. The crystallinity and the melting point were measured at this stage.

(Impregnation step)

The resulting film and γ-butyrolactone (GBL) were placed in a container and heated in a vacuum oven at 120°C for 1 hour so as to adjust the pressure to 50.66 kPa (0.5 atm), thereby impregnating the film with the GBL. After cooling, the conductive auxiliary agent remaining on the surface was wiped off to obtain a solid electrolyte film.

The results of the evaluation are shown in Table 4. In Example 13, since the melting point of the polymer was low, the polymer was kneaded at a relatively low temperature of 260°C, the raw materials were not decomposed or deteriorated, and the productivity was excellent. The solid electrolyte of Example 13 was excellent in ionic conductivity and productivity at room temperature.

[Examples 14 to 29, Comparative Examples 5 to 9]

A solid electrolyte film was prepared and evaluated in the same manner as in Example 13 except that the type of polymer, the type of alkali metal salt, the kneading temperature, the stretch ratio, the pressure, and the molar ratio of the polymer and the alkali metal salt were changed as shown in Table 3. The results of the evaluation are shown in Table 4. The mass ratio of the respective components of a mixed electrolytic-dissociation assistant in Example 22 was EC (30) : PC (30) : EMC (40).

Examples 14 to 29 can be molded at a low temperature, and are excellent in productivity. The solid electrolyte films of these Examples had good ionic conductivity at room temperature and were also excellent in moldability and quality stability. In Comparative Examples 6 to 8, a polymer other than PAS is used, and the affinity with the alkali metal salt and the electrolytic-dissociation assistant solvent is lower than that of PAS, so that the ionic conductivity is poor. Since Comparative Example 7 does not contain the electrolytic-dissociation assistant solvent, dissociation and conduction of the alkali metal salt are insufficient, and the ionic conductivity is poor.

[Comparative Example 10]

In Comparative Example 10, although the polymer was PI (polymer 11), the melting temperature was 400°C or higher. On the other hand, since a decomposition temperature of the lithium salt (Li salt) was 380°C or lower, vaporization decomposition of the Li salt occurred at the time of mixing with the Li salt, so that melting and mixing could not be performed.

[Comparative Example 11]

In Comparative Example 11, LiTFSI and PI (polymer 11) were dissolved in an NMP solution at a molar ratio of 1 : 2. Thereafter, a solution of LiTFSI and PI was cast on a PET substrate and dried in a vacuum oven at 120°C for 3 hours. Residual NMP was 4% by mass. The ionic conductivity and the hygroscopic degree of the obtained electrolyte film were measured. In the present Comparative Example, an initial ionic conductivity reached a level equivalent to that in Example; however, electrolysis due to moisture was likely to occur due to a high hygroscopic degree.

[Table 3]

| | Raw material | | | Production process | | | Molar ratio | |
|---|---|---|---|---|---|---|---|---|
| | Polymer | Alkali metal salt | Electrolytic-dissociation assistant solvent | Stretch ratio (MD/TD) | Kneading temperature (°C) | Impregnation pressure (kPa) | Polymer | Alkali metal salt |
| Example 13 | 1 | 1 | GBL | 1/1 | 260 | 51 | 100 | 45.4 |
| Example 14 | 1 | 2 | GBL | 1/1 | 260 | 51 | 100 | 45.4 |
| Example 15 | 1 | 3 | GBL | 1/1 | 260 | 51 | 100 | 45.4 |
| Example 16 | 1 | 1 | GBL | 1/1 | 260 | 51 | 100 | 8.5 |
| Example 17 | 2 | 1 | GBL | 1/1 | 280 | 51 | 100 | 45.4 |
| Example 18 | 12 | 1 | GBL | 1/1 | 260 | 51 | 100 | 45.4 |
| Example 19 | 5 | 1 | GBL | 1/1 | 280 | 51 | 100 | 45.4 |
| Example 20 | 1 | 1 | NMP | 1/1 | 260 | 51 | 100 | 45.4 |
| Example 21 | 1 | 1 | EC+PC+EMC | 1/1 | 260 | 51 | 100 | 45.4 |
| Example 22 | 1 | 1 | BC | 1/1 | 260 | 51 | 100 | 45.4 |
| Example 23 | 1 | 1 | GVL | 1/1 | 260 | 51 | 100 | 45.4 |
| Example 24 | 1 | 1 | TG | 1/1 | 260 | 51 | 100 | 45.4 |
| Example 25 | 1 | 1 | DG | 1/1 | 260 | 51 | 100 | 45.4 |
| Example 26 | 1 | 1 | DMC | 1/1 | 260 | 51 | 100 | 45.4 |
| Example 27 | 1 | 1 | GBL | 1/1 | 260 | 101 | 100 | 45.4 |
| Example 28 | 1 | 1 | GBL | 1/1 | 260 | 203 | 100 | 45.4 |
| Example 29 | 1 | 1 | GBL | 2/2 | 260 | 51 | 100 | 45.4 |
| Comparative Example 5 | 3 | 1 | GBL | 1/1 | 320 | 51 | 100 | 45.4 |
| Comparative Example 6 | 8 | 1 | GBL | 1/1 | 120 | 51 | 100 | 45.4 |
| Comparative Example 7 | 9 | 1 | GBL | 1/1 | 260 | 51 | 100 | 45.4 |
| Comparative Example 8 | 10 | 1 | GBL | 1/1 | 250 | 51 | 100 | 45.4 |

(continued)

| | Raw material | | | Production process | | | Molar ratio | |
|---|---|---|---|---|---|---|---|---|
| | Polymer | Alkali metal salt | Electrolytic-dissociation assistant solvent | Stretch ratio (MD/TD) | Kneading temperature (°C) | Impregnation pressure (kPa) | Polymer | Alkali metal salt |
| Comparative Example 9 | 1 | 1 | - | 1/1 | 260 | - | 100 | 45.4 |
| Comparative Example 10 | 11 | 1 | NMP | 1/1 | - | 51 | 100 | 45.4 |
| Comparative Example 11 | 11 | 1 | NMP | - | - | - | 100 | 50.0 |
| MD: longitudinal direction<br>TD: width direction | | | | | | | | |

[Table 4]

| | Ion conductivity (S/cm) | Ion diffusion coefficient ($m^2/s$) | Crystallinity (%) | Melting point (°C) | Hygroscopic degree (%) |
|---|---|---|---|---|---|
| Example 13 | $4.0\times10^{-4}$ | $1.9\times10^{-11}$ | 7.6 | 225 | 8 |
| Example 14 | $7.8\times10^{-5}$ | $6.8\times10^{-12}$ | 8.4 | 226 | 8 |
| Example 15 | $6.4\times10^{-5}$ | $4.1\times10^{-12}$ | 8.6 | 226 | 8 |
| Example 16 | $2.3\text{-}10^{-6}$ | $2.1\times10^{-12}$ | 15.4 | 230 | 5 |
| Example 17 | $1.9\times10^{-6}$ | $1.7\times10^{-12}$ | 13.1 | 235 | 12 |
| Example 18 | $1.2\times10^{-6}$ | $1.1\times10^{-12}$ | 19.7 | 240 | 14 |
| Example 19 | $1.7\times10^{-6}$ | $1.4\times10^{-12}$ | 19.3 | 239 | 12 |
| Example 20 | $1.3\times10^{-6}$ | $1.2\times10^{-12}$ | 7.6 | 225 | 8 |
| Example 21 | $5.2\times10^{-6}$ | $3.6\times10^{-12}$ | 7.6 | 225 | 8 |
| Example 22 | $2.6\times10^{-6}$ | $2.4\times10^{-12}$ | 7.6 | 225 | 8 |
| Example 23 | $4.8\times10^{-5}$ | $5.4\times10^{-12}$ | 7.6 | 225 | 8 |
| Example 24 | $1.4\times10^{-6}$ | $1.2\times10^{-12}$ | 7.6 | 225 | 8 |
| Example 25 | $1.8\times10^{-6}$ | $1.7\times10^{-12}$ | 7.6 | 225 | 8 |
| Example 26 | $1.3\times10^{-6}$ | $1.6\times10^{-12}$ | 7.6 | 225 | 8 |
| Example 27 | $1.9\times10^{-6}$ | $1.9\times10^{-12}$ | 7.6 | 225 | 8 |
| Example 28 | $1.1\times10^{-6}$ | $1.1\times10^{-12}$ | 7.6 | 225 | 8 |
| Example 29 | $8.0\times10^{-7}$ | $9.3\times10^{-13}$ | 24.2 | 233 | 8 |
| Comparative Example 5 | $4.1\times10^{-7}$ | $7.8\times10^{-13}$ | 32.4 | 282 | 12 |
| Comparative Example 6 | $<1.0\times10^{-9}$ | $<1.0\times10^{-13}$ | 45.3 | 105 | 14 |
| Comparative Example 7 | $2.0\times10^{-7}$ | $3.7\times10^{-13}$ | 35.1 | 255 | 14 |
| Comparative Example 8 | $<1.0\times10^{-9}$ | $<1.0\times10^{-13}$ | - | 240 | 16 |
| Comparative Example 9 | $<1.0\times10^{-9}$ | $<1.0\times10^{-13}$ | 7.6 | 225 | 8 |
| Comparative Example 10 | | | | | |
| Comparative Example 11 | $2.5\times10^{-4}$ | $1.6\times10^{-11}$ | - | - | 27 |

[Examples 30 to 32]

(Film formation step 1: membranous materials 1 to 3)

The polymer 1 and the alkali metal salt 1 as raw materials were supplied to a twin-screw extruder equipped with a raw material supply port and a vent port in a ratio of 0.7 parts by mass of polymer and 0.3 parts by mass of alkali metal salt. A supply amount of each raw material was adjusted by a weight feeder attached to the raw material supply port. After melting and mixing at a temperature of the extruder (processing temperature in Table 6: 300°C) set according to the melting point of the resin, moisture was removed by vacuum degassing at a vent port, and the molten mixture was melt-extruded from the T-die attached to the tip of the extruder onto a temperature-adjustable cast roll. The relative

crystallinity was controlled by adjusting the temperature of the cast roll (cooling temperature in Table 6) to obtain membranous materials 1 to 3.

(Impregnation step 1: films 1 to 3)

The obtained membranous material was dried in a vacuum oven at 80°C for 16 hours, then punched to a diameter of 16.8 mm with a Thomson blade, and placed in a 20 ml vial, and 0.05 ml of an electrolytic-dissociation assistant solvent was weighed with a micropipette, added dropwise to the vial, and capped with a polyethylene cap. Next, the vial was placed in an oven temperature-controlled to 80°C and allowed to stand for 16 hours, and then the vial was taken out from the oven to obtain films 1 to 3.

[Examples 33 to 36]

(Film formation step 1: membranous materials 4 to 7)

The film formation step 1 was performed in the same manner as for the membranous materials 1 to 3 except that the polymer as the raw material was changed to the polymer 2, the processing temperature was set to 280°C, and the cooling temperature was set to a predetermined temperature in Table 6, and thus membranous materials 4 to 7 were obtained.

(Impregnation step 1: films 4 to 7)

Using the obtained membranous materials 4 to 7, the impregnation step 1 similar to that of the films 1 to 3 was performed to obtain films 4 to 7.

[Examples 37 to 40]

(Film formation step 2: membranous materials 8 to 11)

The polymer 2 and the alkali metal salt 1 as raw materials were mixed at a ratio of 0.7 parts by mass of polymer and 0.3 parts by mass of alkali metal salt, and dried in a vacuum oven. A polyimide film ("Kapton" (registered trademark) manufactured by DU PONT-TORAY CO., LTD.) having a thickness of 75 μm was cut into an A5-size, and 0.2 g of the dried raw material was weighed and placed on the middle thereof. Next, the same polyimide film was placed thereon, placed on a lower plate of a press machine for melt heating set to a predetermined temperature (processing temperature in Table 6: 280°C), and preheated for 30 seconds. Next, the lower plate was raised, brought into close contact with an upper plate, and then pressed with a hydraulic pressure of 8 MPa for 60 seconds. After the pressing, the lower plate was lowered, taken out together with the polyimide film, immediately sandwiched by a press machine for cooling, and cooled for 60 seconds. The relative crystallinity was controlled by adjusting the temperature of the press machine for cooling (cooling temperature in Table 6) to obtain membranous materials 8 to 11.

(Impregnation step 1: films 8 to 11)

Using the obtained membranous materials 8 to 11, the impregnation step 1 similar to that of the films 1 to 7 was performed to obtain films 8 to 11.

[Examples 41 to 44]

(Film formation step 2: membranous materials 8 to 11)

The membranous materials 8 to 11 obtained in the film formation step 2 were used.

(Impregnation step 2: films 12 to 15)

The obtained membranous material was dried in a vacuum oven at 80°C for 16 hours, then punched to a diameter of 16.8 mm with a Thomson blade, and placed in a 20 ml vial, and 0.05 ml of electrolytic-dissociation assistant solvent GBL was weighed with a micropipette and added dropwise to the vial. Then, 0.05 ml of a swelling solvent EtOH was weighed with a micropipette and added dropwise to the vial. Next, the vial was placed on a hot plate temperature-controlled to 80°C and allowed to stand for 4 hours, and then the treated membranous material was taken out from the

vial to obtain films 12 to 15.

[Examples 45 to 48]

(Film formation step 2: membranous materials 8 to 11)

The membranous materials 8 to 11 obtained in the film formation step 2 were used.

(Impregnation step 2: films 16 to 19)

Films 16 to 19 were obtained by performing the impregnation step 2 in the same manner as in the films 12 to 14 except that the membranous materials 8 to 11 were used and $Me_2CO$ was used as the swelling solvent.

[Example 49]

(Film formation step 2: membranous material 11)

The membranous material 11 obtained in the film formation step 2 was used.

(Impregnation step 2: film 20)

A film 20 was obtained by performing the impregnation step 2 in the same manner as in the films 12 to 14 except that the membranous material 11 was used, the NMP was used as the electrolytic-dissociation assistant solvent, and no swelling solvent was used.

[Examples 50 to 52]

(Film formation step 2: membranous materials 12 to 14)

The film formation step 2 was performed in the same manner as for the membranous material 11 except that the polymer 2 and the alkali metal salt 1 as raw materials were mixed at a predetermined ratio in Table 5 to obtain membranous materials 12 to 14.

(Impregnation step 2: films 21 to 23)

Using the membranous materials 12 to 14, the impregnation step 2 was performed in the same manner as in the films 12 to 15 to obtain films 21 to 23.

[Examples 53 to 56]

(Film formation step 2: membranous materials 15 to 18)

The film formation step 2 was performed in the same manner as for the membranous material 11 except that the amounts of the dried raw materials weighed and placed on the polyimide film were changed to 1.0 g, 0.7 g, 0.5 g, and 0.3 g, and membranous materials 15 to 18 were obtained in the corresponding order.

(Impregnation step 2: films 24 to 27)

Using the membranous materials 15 to 18, the impregnation step 2 was performed in the same manner as in the films 12 to 15 to obtain films 24 to 27.

[Example 57]

The film formation step 1 was performed in the same manner as for the membranous materials 1 to 3 except that the polymer and the alkali metal salt as the raw materials were changed to the polymer 2 and the alkali metal salt, the processing temperature was set to 280°C, and the cooling temperature was set to 5°C, and thus membranous material 19 was obtained.

(Impregnation step 2: film 28)

Using the membranous material 19, the impregnation step 2 was performed in the same manner as in the films 12 to 15 to obtain a film 28.

[Comparative Examples 12 and 13]

(Film formation step 3: membranous materials 20, 21)

The polymer 2 as the raw material of the membranous material was dried in a vacuum oven. At that point, the polymer was not mixed with the alkali metal salt. A polyimide film ("Kapton" (registered trademark) manufactured by DU PONT-TORAY CO., LTD.) having a thickness of 75 μm was cut into an A5-size, and 0.2 g of the dried polymer 2 was weighed and placed on the middle thereof. Next, the same polyimide film was placed thereon, placed on the lower plate of the press machine for melt heating set to 280°C, and preheated for 30 seconds. Next, the lower plate was raised, brought into close contact with an upper plate, and then pressed with a hydraulic pressure of 8 MPa for 60 seconds. After the pressing, the lower plate was lowered, taken out together with a Kapton film, immediately sandwiched by the press machine for cooling, and cooled for 60 seconds. The relative crystallinity was controlled by adjusting the temperature of the press machine for cooling to 120°C and 5°C to obtain membranous materials 20 to 21.

(Impregnation step 3: films 29, 30)

The obtained membranous materials 20 and 21 were dried in a vacuum oven at 80°C for 16 hours, then punched to a diameter of 16.8 mm with a Thomson blade, and placed in a 20 ml vial, and 10 ml of a solution obtained by dissolving the alkali metal salt 1 in a mixed solution of the electrolytic-dissociation assistant solvent GBL and the swelling solvent EtOH in a volume ratio of 1 : 1 at room temperature until the concentration reached a saturated concentration was weighed, added dropwise to the vial, and capped with a polyethylene cap. Next, the vial was placed in the oven temperature-controlled to 80°C and allowed to stand for 16 hours, and then the vial was taken out from the oven to obtain films 29 and 30.

[Comparative Examples 14 and 15]

(Film formation step 3: membranous materials 20, 21)

The membranous materials 20 and 21 obtained in the film formation step 3 were used.

(Impregnation step 3: films 31, 32)

The impregnation step 3 was performed in the same manner as in the films 29 snd 30 except that no swelling solvent was used, and films 31 and 32 were obtained.

[Comparative Example 16]

(Film formation step 3: membranous material 20)

The membranous material 20 obtained in the film formation step 3 was used.

(Impregnation step 3: film 33)

A film 33 was obtained by performing the impregnation step 3 in the same manner as in the film 29 except that the NMP was used as the electrolytic-dissociation assistant solvent, and no swelling solvent was used.

[Comparative Example 17]

(Attempts to produce membranous material 22)

The polymer 2 and the alkali metal salt 1 dried in a vacuum oven were mixed at a ratio of 0.7 parts by mass and 0.3 parts by mass, respectively, in a twin-screw extruder equipped with a raw material supply port and a supply port for liquid addition, melt-extruded at 280°C, and the GBL as the electrolytic-dissociation assistant solvent was added

dropwise from the supply port for liquid addition by a miniature peristaltic pump so as to be 30% by mass with respect to the discharge amount. Although the mixture was melt-extruded from the T-die attached to the tip of the extruder to a cast roll set at 5°C, the GBL vaporized from the T-die was foamed, and the viscosity of the resin was lowered to cause a sharp neck-in, so that a membranous material was not obtained.

[Comparative Example 18]

(Attempts to produce membranous material 23)

The polymer 2 and the alkali metal salt 1 as some of the raw materials were mixed at a ratio of 0.7 parts by mass and 0.3 parts by mass, and dried in a vacuum oven. A polyimide film ("Kapton" (registered trademark) manufactured by DU PONT-TORAY CO., LTD.) having a thickness of 75 μm was cut into an A5-size, 0.2 g of the dried raw material was weighed and placed on the middle thereof, and then 0.06 g of the GBL was added dropwise thereto. Next, the same polyimide film was placed thereon, placed on the lower plate of the press machine for melt heating set to 280°C, and preheated for 30 seconds. Next, the lower plate was raised, brought into close contact with an upper plate, and then pressed with a hydraulic pressure of 8 MPa for 60 seconds. After the pressing, the lower plate was lowered, taken out together with the polyimide film, immediately sandwiched by a press machine for cooling set at 5°C, and cooled for 60 seconds. However, the vaporized GBL formed many holes, and a membranous material was not obtained.

The configuration and the like of the membranous material are shown in Tables 5 and 6, and the configuration and the like of the film are shown in Tables 7 and 8.

[Table 5]

| | Polymer | Alkali metal salt | Electrolytic-dissociation assistant solvent | Resin [wt%] | Alkali metal salt [wt%] |
|---|---|---|---|---|---|
| Membranous material 1 | 1 | 1 | - | 0.7 | 0.3 |
| Membranous material 2 | 1 | 1 | - | 0.7 | 0.3 |
| Membranous material 3 | 1 | 1 | - | 0.7 | 0.3 |
| Membranous material 4 | 2 | 1 | - | 0.7 | 0.3 |
| Membranous material 5 | 2 | 1 | - | 0.7 | 0.3 |
| Membranous material 6 | 2 | 1 | - | 0.7 | 0.3 |
| Membranous material 7 | 2 | 1 | - | 0.7 | 0.3 |
| Membranous material 8 | 2 | 1 | - | 0.7 | 0.3 |
| Membranous material 9 | 2 | 1 | - | 0.7 | 0.3 |
| Membranous material 10 | 2 | 1 | - | 0.7 | 0.3 |
| Membranous material 11 | 2 | 1 | - | 0.7 | 0.3 |
| Membranous material 12 | 2 | 1 | - | 0.8 | 0.2 |
| Membranous material 13 | 2 | 1 | - | 0.6 | 0.4 |

(continued)

| | Polymer | Alkali metal salt | Electrolytic-dissociation assistant solvent | Resin [wt%] | Alkali metal salt [wt%] |
|---|---|---|---|---|---|
| Membranous material 14 | 2 | 1 | - | 0.5 | 0.5 |
| Membranous material 15 | 2 | 1 | - | 0.7 | 0.3 |
| Membranous material 16 | 2 | 1 | - | 0.7 | 0.3 |
| Membranous material 17 | 2 | 1 | - | 0.7 | 0.3 |
| Membranous material 18 | 2 | 1 | - | 0.7 | 0.3 |
| Membranous material 19 | 2 | 2 | - | 0.7 | 0.3 |
| Membranous material 20 | 2 | - | - | 1 | 0 |
| Membranous material 21 | 2 | - | - | 1 | 0 |
| Membranous material 22 | 2 | 1 | GBL | 0.7 | 0.3 |
| Membranous material 23 | 2 | 1 | GBL | 0.7 | 0.3 |

[Table 6]

| | Processing temperature (°C) | Cooling temperature (°C) | Relative Crystallinity | Thickness [μm] |
|---|---|---|---|---|
| Membranous material 1 | 300 | 90 | 0.5 | 20 |
| Membranous material 2 | 300 | 60 | 0.3 | 20 |
| Membranous material 3 | 300 | 5 | 0.05 | 20 |
| Membranous material 4 | 280 | 120 | 1 | 20 |
| Membranous material 5 | 280 | 90 | 0.5 | 20 |
| Membranous material 6 | 280 | 60 | 0.3 | 20 |
| Membranous material 7 | 280 | 5 | 0.05 | 20 |
| Membranous material 8 | 280 | 120 | 1 | 20 |
| Membranous material 9 | 280 | 90 | 0.5 | 20 |
| Membranous material 10 | 280 | 60 | 0.3 | 20 |
| Membranous material 11 | 280 | 5 | 0.05 | 20 |
| Membranous material 12 | 280 | 5 | 0.05 | 20 |
| Membranous material 13 | 280 | 5 | 0.05 | 20 |

(continued)

| | Processing temperature (°C) | Cooling temperature (°C) | Relative Crystallinity | Thickness [μm] |
|---|---|---|---|---|
| Membranous material 14 | 280 | 5 | 0.05 | 20 |
| Membranous material 15 | 280 | 5 | 0.05 | 100 |
| Membranous material 16 | 280 | 5 | 0.05 | 70 |
| Membranous material 17 | 280 | 5 | 0.05 | 50 |
| Membranous material 18 | 280 | 5 | 0.05 | 30 |
| Membranous material 19 | 280 | 5 | 0.05 | 20 |
| Membranous material 20 | 280 | 120 | 1 | 20 |
| Membranous material 21 | 280 | 5 | 0.05 | 20 |
| Membranous material 22 | 280 | 5 | - | - |
| Membranous material 23 | 280 | 5 | - | - |

[Table 7]

| | Film | Membranous material | Electrolytic-dissociation assistant | Swelling solvent | Alkali metal salt |
|---|---|---|---|---|---|
| Example 30 | 1 | 1 | GBL | - | - |
| Example 31 | 2 | 2 | GBL | - | - |
| Example 32 | 3 | 3 | GBL | - | - |
| Example 33 | 4 | 4 | GBL | - | - |
| Example 34 | 5 | 5 | GBL | - | - |
| Example 35 | 6 | 6 | GBL | - | - |
| Example 36 | 7 | 7 | GBL | - | - |
| Example 37 | 8 | 8 | GBL | - | - |
| Example 38 | 9 | 9 | GBL | - | - |
| Example 39 | 10 | 10 | GBL | - | - |
| Example 40 | 11 | 11 | GBL | - | - |
| Example 41 | 12 | 8 | GBL | EtOH | - |
| Example 42 | 13 | 9 | GBL | EtOH | - |
| Example 43 | 14 | 10 | GBL | EtOH | - |
| Example 44 | 15 | 11 | GBL | EtOH | - |
| Example 45 | 16 | 8 | GBL | $Me_2CO$ | - |

(continued)

| | Film | Membranous material | Electrolytic-dissociation assistant | Swelling solvent | Alkali metal salt |
|---|---|---|---|---|---|
| Example 46 | 17 | 9 | GBL | $Me_2CO$ | - |
| Example 47 | 18 | 10 | GBL | $Me_2CO$ | - |
| Example 48 | 19 | 11 | GBL | $Me_2CO$ | - |
| Example 49 | 20 | 11 | NMP | - | - |
| Example 50 | 21 | 12 | GBL | EtOH | - |
| Example 51 | 22 | 13 | GBL | EtOH | - |
| Example 52 | 23 | 14 | GBL | EtOH | - |
| Example 53 | 24 | 15 | GBL | EtOH | - |
| Example 54 | 25 | 16 | GBL | EtOH | - |
| Example 55 | 26 | 17 | GBL | EtOH | - |
| Example 56 | 27 | 18 | GBL | EtOH | - |
| Example 57 | 28 | 19 | GBL | EtOH | - |
| Comparative Example 12 | 29 | 20 | GBL | EtOH | 1 |
| Comparative Example 13 | 30 | 21 | GBL | EtOH | 1 |
| Comparative Example 14 | 31 | 20 | GBL | - | 1 |
| Comparative Example 15 | 32 | 21 | GBL | - | 1 |
| Comparative Example 16 | 33 | 20 | NMP | - | 1 |

[Table 8]

| | Film | Membranous material | $\sigma$[S/cm] | Relative standard deviation |
|---|---|---|---|---|
| Example 30 | 1 | 1 | $4.0\times10^{-6}$ | 0.8 |
| Example 31 | 2 | 2 | $5.0\times10^{-5}$ | 0.6 |
| Example 32 | 3 | 3 | $7.5\times10^{-5}$ | 0.4 |
| Example 33 | 4 | 4 | $5.0\times10^{-6}$ | 1 |
| Example 34 | 5 | 5 | $3.0\times10^{-5}$ | 0.8 |
| Example 35 | 6 | 6 | $1.0\times10^{-4}$ | 0.6 |
| Example 36 | 7 | 7 | $1.3\times10^{-4}$ | 0.4 |
| Example 37 | 8 | 8 | $5.5\times10^{-6}$ | 1 |
| Example 38 | 9 | 9 | $3.1\times10^{-4}$ | 0.8 |
| Example 39 | 10 | 10 | $1.1\times10^{-4}$ | 0.6 |
| Example 40 | 11 | 11 | $1.3\times10^{-4}$ | 0.4 |
| Example 41 | 12 | 8 | $5.5\times10^{-6}$ | 0.15 |
| Example 42 | 13 | 9 | $3.1\times10^{-4}$ | 0.15 |

(continued)

| | Film | Membranous material | σ[S/cm] | Relative standard deviation |
|---|---|---|---|---|
| Example 43 | 14 | 10 | $1.1\times10^{-4}$ | 0.15 |
| Example 44 | 15 | 11 | $1.3\times10^{-4}$ | 0.15 |
| Example 45 | 16 | 8 | $5.0\times10^{-6}$ | 0.16 |
| Example 46 | 17 | 9 | $3.1\times10^{-4}$ | 0.16 |
| Example 47 | 18 | 10 | $1.0\times10^{-4}$ | 0.16 |
| Example 48 | 19 | 11 | $1.3\times10^{-4}$ | 0.16 |
| Example 49 | 20 | 11 | $9.0\times10^{-5}$ | 0.4 |
| Example 50 | 21 | 12 | $1.0\times10^{-5}$ | 0.15 |
| Example 51 | 22 | 13 | $1.3\times10^{-4}$ | 0.15 |
| Example 52 | 23 | 14 | $1.3\times10^{-4}$ | 0.15 |
| Example 53 | 24 | 15 | $6.0\times10^{-5}$ | 0.15 |
| Example 54 | 25 | 16 | $7.5\times10^{-5}$ | 0.15 |
| Example 55 | 26 | 17 | $9.0\times10^{-5}$ | 0.15 |
| Example 56 | 27 | 18 | $1.1\times10^{-4}$ | 0.15 |
| Example 57 | 28 | 19 | $1.0\times10^{-4}$ | 0.15 |
| Comparative Example 12 | 29 | 20 | $6.9\times10^{-10}$ | 0.15 |
| Comparative Example 13 | 30 | 21 | $5.0\times10^{-10}$ | 0.15 |
| Comparative Example 14 | 31 | 20 | $3.5\times10^{-10}$ | 0.15 |
| Comparative Example 15 | 32 | 21 | $2.5\times10^{-10}$ | 0.15 |
| Comparative Example 16 | 33 | 20 | $1.0\times10^{-10}$ | 0.15 |

By obtaining a membranous material composed of an alkali metal salt and a specific polymer and then impregnating the membranous material with an electrolytic-dissociation assistant solvent, a film exhibiting good conductivity could be obtained with good productivity. On the other hand, in the process of impregnating the membranous material of a specific polymer with the alkali metal salt and the electrolytic-dissociation assistant solvent, a film having good conductivity was not obtained.

INDUSTRIAL APPLICABILITY

According to the present invention, it is possible to provide a solid electrolyte which exhibits good ionic conductivity in a room temperature state and is excellent in moldability, productivity, and quality stability, an electrode, a battery and a capacitor using the solid electrolyte, and a method of producing the solid electrolyte.

DESCRIPTION OF REFERENCE SIGNS

1: Spacer
2: Positive electrode
3: Solid electrolyte
4: Lithium metal negative electrode
5: Plate spring
6: Negative electrode case
7: Positive electrode case
8: Gasket

## Claims

1. A solid electrolyte comprising an alkali metal salt and a polymer, wherein the polymer has one or more monomer units selected from the group consisting of chemical formulas (1) to (7):

[CHEM. 1]

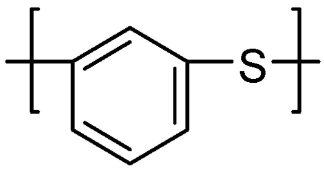

Chemical formula (1)

[CHEM. 2]

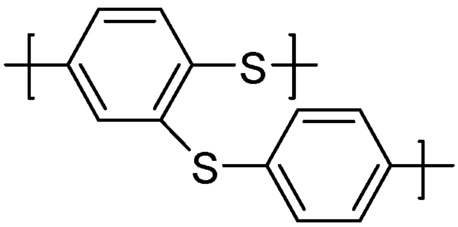

Chemical formula (2)

[CHEM. 3]

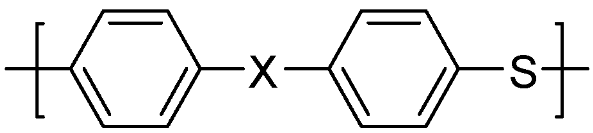

Chemical formula (3)

wherein X represents an alkylene group, O, CO, or $SO_2$,

[CHEM. 4]

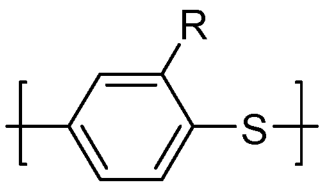

Chemical formula (4)

wherein R represents an alkyl group, a nitro group, or an alkoxy group,

[CHEM. 5]

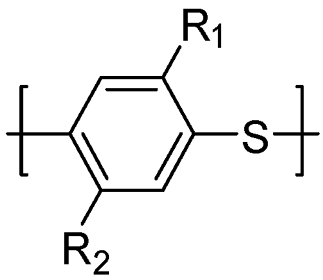

Chemical formula (5)

wherein $R_1$ and $R_2$ each independently represent an alkyl group, a nitro group, or an alkoxy group,

[CHEM. 6]

Chemical formula (6)

[CHEM. 7]

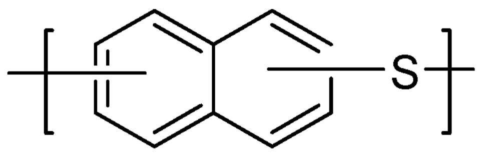

Chemical formula (7).

2. The solid electrolyte according to claim 1, wherein the polymer contains 5 mol% or more of the monomer unit selected from the chemical formulas (1) to (7) in 100 mol% of all monomer units.

3. The solid electrolyte according to claim 1 or 2, wherein a molar ratio of all the monomer units to the alkali metal salt (moles of all the monomer units : moles of the alkali metal salt) in the polymer is 100 : 2 to 100 : 400.

4. he solid electrolyte according to any one of claims 1 to 3, further comprising an electron acceptor.

5. The solid electrolyte according to any one of claims 1 to 4, wherein crystallinity by a value obtained by raising a temperature of a solid content to 400°C with a differential scanning calorimeter and dividing a heat quantity (J/g) by an area of a widest peak by 146.2 (J/g) is 20% or less.

6. The solid electrolyte according to any one of claims 1 to 5, comprising a solvent in which an ion dissociation degree (1-ξ) defined by Formula (1) is 0.1 or more at 298 K (25°C), and a diffusion coefficient of solvent defined by Formula (2) is 15 or less at 298 K (25°C):

$$\sigma_{imp} = (e_0^2 N/kT)\ (D_{Lithium} + D_{Anion})\ (1-\xi) \ldots \quad \text{Formula (1)}$$

$$D_{solvent} = kT/c\pi\eta r_s \ldots \quad \text{Formula (2)}$$

wherein the symbols have the following meanings,

$\sigma_{imp}$: ionic conductivity (S/m),
$e_0$: elementary charge (C),
N: Avogadro constant ($mol^{-1}$),
k: Boltzmann constant (J/K),
T: temperature (K),
$D_{Lithium}$: diffusion coefficient of lithium ions ($m^2/s$),
$D_{Anion}$: diffusion coefficient of $N(SO_2CF_3)_2^-$ ($m^2/s$),
(1-ξ): degree of ionic dissociation,
$D_{solvent}$: diffusion coefficient of solvent ($10^{-10}$ $m^2/s$),
c: boundary condition constant,
n: circumference ratio,
η: viscosity (Pa·s), and
$r_s$: radius of diffusion (m).

**7.** The polymer electrolyte according to claim 6, wherein the solvent contains one or more selected from the group consisting of water, γ-butyrolactone, N-methylpyrrolidone, butylene carbonate (BC), ethylene carbonate (EC), propylene carbonate (PC), methyl-γ-butyrolactone (GVL), triglyme (TG), diglyme (DG), ethyl methyl carbonate (EMC), and dimethyl carbonate (DMC).

**8.** An electrode comprising the solid electrolyte according to any one of claims 1 to 7 and an active material.

**9.** A battery comprising the solid electrolyte according to any one of claims 1 to 7.

**10.** A capacitor comprising the solid electrolyte according to any one of claims 1 to 7.

**11.** A method of producing the solid electrolyte according to any one of claims 1 to 7, the method comprising:
a mixing step of mixing a polymer having one or more monomer units selected from the group consisting of the chemical formulas (1) to (7) and an alkali metal salt to obtain a mixture; and a molding step of molding the mixture at a temperature of 60°C or higher and 320°C or lower.

**12.** The method of producing the solid electrolyte according to claim 11, further comprising an impregnation step of molding the mixture into a membranous material by the molding step and impregnating the membranous material with a solvent after the molding step, wherein the solvent has an ion dissociation degree (1-ξ) defined by Formula (1) of 0.1 or more at 298 K (25°C), and a diffusion coefficient of solvent defined by Formula (2) of 15 or less at 298 K (25°C) :

$$\sigma_{imp} = (e_0^2N/kT)(D_{Lithium}+D_{Anion})(1-\xi)\ldots \quad \text{Formula (1)}$$

$$D_{solvent} = kT/c\pi\eta r_s\ldots \quad \text{Formula (2)}$$

wherein the symbols have the following meanings,

$\sigma_{imp}$: ionic conductivity (S/m),
$e_0$: elementary charge (C),
N: Avogadro constant ($mol^{-1}$),
k: Boltzmann constant (J/K),
T: temperature (K),
$D_{Lithium}$: diffusion coefficient of lithium ions ($m^2/s$),
$D_{Anion}$: diffusion coefficient of $N(SO_2CF_3)_2^-$ ($m^2/s$),
(1-ξ): degree of ionic dissociation,
$D_{solvent}$: diffusion coefficient of solvent ($10^{-10}$ $m^2/s$),
c: boundary condition constant,
n: circumference ratio,
η: viscosity (Pa·s), and
$r_s$: radius of diffusion (m).

**13.** The method of producing the solid electrolyte according to claim 12, wherein the solvent contains one or more selected from the group consisting of water, γ-butyrolactone, N-methylpyrrolidone, butylene carbonate (BC), ethylene carbonate (EC), propylene carbonate (PC), methyl-γ-butyrolactone (GVL), triglyme (TG), diglyme (DG), ethyl methyl carbonate (EMC), and dimethyl carbonate (DMC).

FIG. 1

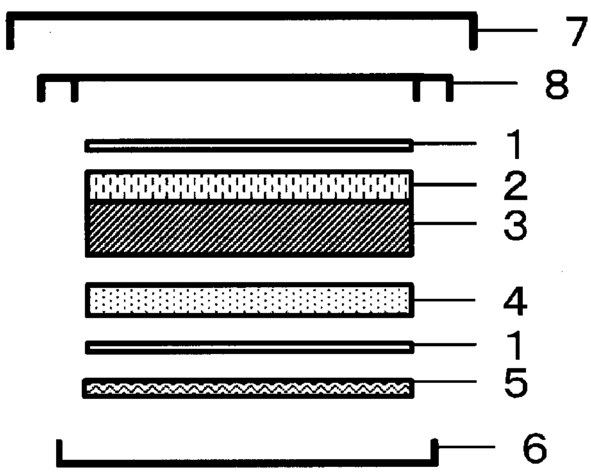

**INTERNATIONAL SEARCH REPORT**

International application No. PCT/JP2020/048112

A. CLASSIFICATION OF SUBJECT MATTER

H01G 11/56(2013.01)i; H01M 10/052(2010.01)i; H01M10/0565(2010.01)i; H01B 1/06(2006.01)i; C08G 75/0204(2016.01)i

FI: H01B1/06 A; H01M10/052; H01G11/56; C08G75/0204; H01M10/0565

According to International Patent Classification (IPC) or to both national classification and IPC

B. FIELDS SEARCHED

Minimum documentation searched (classification system followed by classification symbols)

H01G11/56; H01M10/052; H01M10/0565; H01B1/06; C08G75/0204

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-129480 A (TORAY INDUSTRIES, INC.) 19 May 2005 (2005-05-19) claims, paragraphs [0011]-[0014], [0025] | 1-13 |
| Y | JP 2611379 B2 (TORAY INDUSTRIES, INC.) 27 February 1997 (1997-02-27) column 2, lines 5-25 | 1-13 |

☐ Further documents are listed in the continuation of Box C. ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 13 January 2021 (13.01.2021) | 26 January 2021 (26.01.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/048112

| Patent Documents referred in the Report | Publication Date | Patent Family | Publication Date |
|---|---|---|---|
| JP 2005-129480 A | 19 May 2005 | (Family: none) | |
| JP 2611379 B2 | 27 Feb. 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20170005356 A1
- CN 106450424 A

### Non-patent literature cited in the description

- **R. B. HESLOP ; K. JONES.** Inorganic Chemistry - A Guide to Advanced Study